(19) Europäisches Patentamt / European Patent Office / Office européen des brevets

(11) **EP 2 517 855 A1**

(12) **EUROPEAN PATENT APPLICATION**
published in accordance with Art. 153(4) EPC

(43) Date of publication:
**31.10.2012 Bulletin 2012/44**

(21) Application number: **10839563.3**

(22) Date of filing: **24.12.2010**

(51) Int Cl.:
***B29B 17/02*** (2006.01) ***B03C 1/00*** (2006.01)
***B29B 17/04*** (2006.01) ***C08J 11/00*** (2006.01)
***C08L 69/00*** (2006.01) ***G11B 7/253*** (2006.01)
***G11B 7/26*** (2006.01)

(86) International application number:
**PCT/JP2010/073365**

(87) International publication number:
**WO 2011/078334 (30.06.2011 Gazette 2011/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.12.2009 JP 2009293364**
**11.05.2010 JP 2010109356**
**21.07.2010 JP 2010164262**

(71) Applicants:
- **Idemitsu Kosan Co., Ltd.**
  **Chiyoda-ku**
  **Tokyo 100-8321 (JP)**
- **Panac Industries, Inc.**
  **Ashigarakami-gun, Kanagawa 258-0021 (JP)**

(72) Inventors:
- **ISOZAKI, Toshio**
  **Tokyo 100-8321 (JP)**
- **MITSUHASHI, Kenichi**
  **Ichihara-shi**
  **Chiba 299-0193 (JP)**
- **ITO, Nobuyuki**
  **Minamiashigara-shi**
  **Kanagawa 250-0121 (JP)**

(74) Representative: **Gille Hrabal**
**Patentanwälte**
**Brucknerstrasse 20**
**40593 Düsseldorf (DE)**

(54) **METHOD FOR RECOVERING POLYCARBONATE RESIN FROM DISCARDED OPTICAL DISC AND/OR RECOVERED OPTICAL DISC, FLAME-RETARDANT POLYCARBONATE RESIN COMPOSITION, INJECTION MOLDED BODY, AND MOLDED ARTICLE FOR OPTICAL USE**

(57) Provided is a method for recovering a polycarbonate resin from a discarded optical disk and/or a recovered optical disk, which has a polycarbonate resin substrate. The following process steps (I) and (II) are applied to a chemically treated product, which is obtained by crushing a discarded optical disk and/or a recovered optical disk, and chemically treating the resulting crushed product. Process step (I) : a step containing (a) removing a magnetic metal foreign matter with a magnet, and (b) identifying a colored foreign matter with an optical camera, and removing the colored foreign matter. Process step (II): a step containing detecting the presence of a metal foreign matter with a metal foreign matter detector, and removing a resin containing the metal foreign matter.

Fig. 1

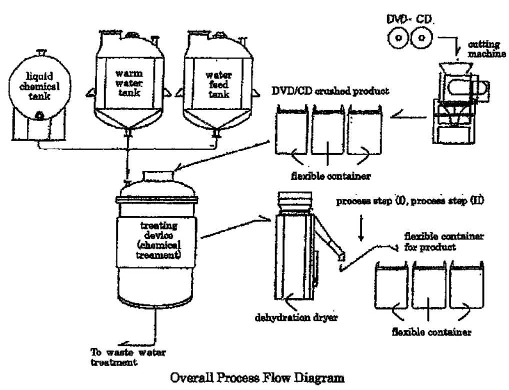

Overall Process Flow Diagram

EP 2 517 855 A1

## Description

### Technical Field

The present invention relates to a method for recovering a polycarbonate resin from a discarded optical disk and/or a recovered optical disk, and an optical molded article obtained by molding a recovered polycarbonate resin. More specifically, it relates to a method for recovering a polycarbonate resin from an unused or used recovered optical disk or a discarded optical disk as a defective product in a production process, which has a polycarbonate resin substrate, and an optical molded article with high quality obtained by molding a recovered polycarbonate resin.
The present invention also relates to a flame retardant polycarbonate resin composition containing a discarded optical disk and/or a recovered optical disk, and an injection molded article of the resin composition.

### Background Art

A polycarbonate resin composition containing a polycarbonate resin having mixed therein a styrene resin, a non-halogen-containing phosphate ester and a core-shell graft rubber elastomer, and depending on necessity an inorganic filler and a polyfluoroolefin resin is used widely in such fields as an office automation equipment, an electric and electronic equipment, an automobile and other miscellaneous goods.
In recent years, reuse of the resources and so-called recycling, in which a waste product is recovered and reused from the standpoint of environmental protection, are actively studied, and are considered as one of the important issues in the field of an office automation equipment where the resins are used in a large amount as described above.
From the above standpoint, it has been known that a polycarbonate resin that is recovered from a housing and a paper feeding tray of a duplicator is used as a polycarbonate resin as a major component of a polycarbonate resin composition (see, for example, Patent Document 1). However, the recovered resin contains various components in addition to the polycarbonate resin originally contained, and thus there is a difficulty in controlling the final contents of the components.
In view of the above, the use of a polycarbonate resin that is recovered from an optical disk substrate has been considered, and as a production method of the polycarbonate resin, a method, in which a recovered polycarbonate disk as a raw material is crushed and subjected to a chemical treatment, has been known (see, for example, Patent Document 2). However, the disk recovered by the method contains impurities in various levels, and a metal foreign matter and a colored foreign matter are not sufficiently removed. Furthermore, impurities mixed in the production process remain untreated, and the polycarbonate resin containing them may be used as a regenerated polycarbonate resin.
A polycarbonate resin composition containing a crushed product of an optical disk containing a polycarbonate resin substrate having mixed therein an inorganic filler, an ABS resin and a phosphate ester flame retardant has been proposed (see, for example, Patent Document 3). In this case, however, the crushed product of an optical disk containing a polycarbonate resin substrate may contain a metal foreign matter and a colored foreign matter not removed, and contains impurities mixed in the production process remaining untreated. In the case where the optical disk crushed product is used as a recovered polycarbonate resin, with which a phosphate ester flame retardant is mixed to provide a flame retardant polycarbonate molded article, there may be such problems as decrease of the flame retardancy, decrease of the mechanical strength, decrease of the moisture resistance, and difficulty in application to a product with light color, such as white and gray, which is frequently used in an office automation equipment.
A polycarbonate-polyorganosiloxane copolymer (PC-POS copolymer) generally exhibits higher flame retardancy than a polycarbonate resin formed from bisphenol A as a starting material, and thus is used as a base resin of a polycarbonate resin for increasing the flame retardancy, without the use of a halogen flame retardant or an organic phosphorus flame retardant in combination. For example, a flame retardant polycarbonate resin composition containing a polycarbonate-polyorganosiloxane copolymer-containing resin as a polycarbonate resin and polytetrafluoroethylene having a fibril-forming capability has been known (see, for example, Patent Document 4). The composition exhibits excellent flame retardancy with a small content of polyorganosiloxane in a particular range. Furthermore, no phosphorus flame retardant is used, and thus upon molding the resin composition, corrosion of a mold, formation of harmful gas, and the like are difficult to occur. Moreover, the resin composition is excellent in hygrothermal resistance, and thus the recycling rate after use may be advantageously increased.
However, upon using a polycarbonate-polyorganosiloxane copolymer as a base resin of a polycarbonate resin composition, it is generally necessary to use in combination a polycarbonate resin other than the polycarbonate-polyorganosiloxane copolymer, for controlling the molecular weight and the siloxane content of the polycarbonate resin, and in the case where the recovered polycarbonate resin is used as the polycarbonate resin, the properties including the impact resistance and the like may be disadvantageously decreased with a recovered polycarbonate resin that is obtained by the ordinary recovering method.

Related Art Documents

Patent Documents

Patent Document 1: JP-A-2005-8816

Patent Document 2: JP-A-2007-276349

Patent Document 3: JP-A-9-316316

Patent Document 4: JP-A-8-81620

## Summary of the Invention

### Problems to be solved by the Invention

The present invention has been made under the circumstances, and objects thereof are (1) to provide a method for recovering a polycarbonate resin from an unused or used recovered optical disk or a discarded optical disk as a defective product in a production process, which has a polycarbonate resin substrate, and an optical molded article with high quality obtained by molding a recovered polycarbonate resin, and (2) to provide, by using the recovered polycarbonate, a flame retardant polycarbonate resin composition that is free of decrease of the flame retardancy, decrease of the mechanical strength, decrease of the moisture resistance, and the like, is not limited in use range, such as color to be utilized, and can be increased in recycling rate after use, and an injection molded article of the resin composition.

### Means for solving the Problems

As a result of earnest investigations on the problems made by the present inventors, it has found that the problems may be solved by crushing a discarded optical disk and/or a recovered optical disk, which has a polycarbonate resin substrate, chemically treating the resulting crushed product for removing impurities, and subjecting the product to the particular physical process steps, and thus the present invention has been achieved.
The present invention relates to the following items (1) to (20).

(1) A method for recovering a polycarbonate resin, containing steps of: crushing a discarded optical disk and/or a recovered optical disk, which has a polycarbonate resin substrate; chemically treating a resulting crushed product; and subjecting a chemically treated product to the following process steps (I) and (II):

process step (I) : a step containing steps of: (a) removing a magnetic metal foreign matter with a magnet, and (b) identifying a colored foreign matter with an optical camera, and removing the colored foreign matter, and
process step (II): a step containing detecting the presence of a metal foreign matter with a metal foreign matter detector, and removing a resin containing the metal foreign matter.

(2) The method for recovering a polycarbonate resin according to the item (1), wherein the process step (I) contains the step (a) and then the step (b).
(3) The method for recovering a polycarbonate resin according to the item (1) or (2), wherein the chemically treated product is continuously fed to the process step (I), and the process step (I) and the process step (II) are each performed continuously.
(4) The method for recovering a polycarbonate resin according to any one of the items (1) to (3), wherein the magnet used in the step (a) has a magnetic flux density of from 10, 000 to 12,000 G.
(5) The method for recovering a polycarbonate resin according to any one of the items (1) to (4), wherein the optical camera used in the step (b) is a CCD camera, and the step of identifying a colored foreign matter is performed for a treated product on a belt conveyor.
(6) The method for recovering a polycarbonate resin according to any one of the items (1) to (5), wherein the crushed product obtained in the crushing step has an average particle diameter of from 3 to 30 mm.
(7) A recovered polycarbonate resin obtained by the recovering method according to any one of the items (1) to (6), having a sodium content of 0.5 ppm by mass or less, an iron content of 1 ppm by mass or less, and a content of a metal, which is derived from a recording film or a colorant film, of 0.1 ppm by mass or less.

(8) An optical polycarbonate resin containing from 5 to 100% by mass of the recovered polycarbonate resin (A-1) according to the item (7) and from 95 to 0% by mass of a virgin optical polycarbonate resin.
(9) An optical molded article containing the optical polycarbonate resin according to the item (8) having been molded.

(10) A flame retardant polycarbonate resin composition containing 100 parts by mass of a resin component containing from 50 to 95% by mass of a polycarbonate resin (A) containing the recovered polycarbonate resin (A-1) according to the item (7) and from 50 to 5% by mass of an amorphous styrene resin (B), and from 1 to 20 parts by mass of a non-halogen-containing phosphate ester compound (C).
(11) The flame retardant polycarbonate resin composition according to the item (10), wherein a content of the recovered polycarbonate resin (A-1) in the polycarbonate resin (A) is from 5 to 95% by mass.
(12) The flame retardant polycarbonate resin composition according to the item (10) or (11), wherein the resin composition further contains from 1 to 40 parts by mass of an inorganic filler (D) per 100 parts by mass of the resin component containing the polycarbonate resin (A) and the amorphous styrene resin (B).
(13) The flame retardant polycarbonate resin composition according to any one of the items (10) to (12), wherein the resin composition further contains from 1 to 15 parts by mass of an impact resistance improving agent (E) per 100 parts by mass of the resin component containing the polycarbonate resin (A) and the amorphous styrene resin (B).
(14) An injection molded article containing the flame retardant polycarbonate resin composition according to any one of the items (10) to (13).

(15) A flame retardant polycarbonate resin composition containing 100 parts by mass of a polycarbonate resin mixture (A') containing from 5 to 95% by mass of the recovered polycarbonate resin (A-1) according to the item (7), from 95 to 5% by mass of a polycarbonate-polyorganosiloxane copolymer (A-2) and from 0 to 90% by mass of a virgin aromatic polycarbonate resin (A-3) other than the polycarbonate-polyorganosiloxane copolymer, and from 0.01 to 5 parts by mass of a polyfluoroolefin resin (F).
(16) The flame retardant polycarbonate resin composition according to the item (15), wherein the polycarbonate resin mixture (A') has a polyorganosiloxane content of from 0.4 to 10% by mass.
(17) The flame retardant polycarbonate resin composition according to the item (15) or (16) , wherein the resin composition further contains from 5 to 30 parts by mass of an amorphous styrene resin (B) per 100 parts by mass of the polycarbonate resin mixture (A').
(18) The flame retardant polycarbonate resin composition according to any one of the items (15) to (17) , wherein the resin composition further contains from 1 to 40 parts by mass of an inorganic filler (D) per 100 parts by mass of the polycarbonate resin mixture (A').
(19) The flame retardant polycarbonate resin composition according to any one of the items (15) to (18) , wherein the resin composition further contains from 1 to 15 parts by mass of an impact resistance improving agent (E) per 100 parts by mass of the polycarbonate resin mixture (A').
(20) An injection molded article containing the flame retardant polycarbonate resin composition according to any one of the items (15) to (19).

Advantages of the Invention

According to the present invention, a discarded optical disk and/or a recovered optical disk, which has a polycarbonate resin substrate, is applied to the aforementioned process steps, and thereby such a flame retardant polycarbonate resin composition and an injection molded article thereof are obtained that is free of decrease of the flame retardancy, decrease of the mechanical strength, decrease of the moisture resistance, and the like, and is not limited in use range, such as color to be utilized, with a recovered polycarbonate resin, which has been considered to be difficult to use, as a raw material.

Brief Description of the Drawings

Fig. 1 is a flow diagram showing an example of the method for recovering a polycarbonate resin according to the present invention.
Fig. 2 is a schematic diagram showing an example of the process step (I) in the present invention.

Fig. 3 is a schematic diagram showing an example of the step (b) in the process step (I) in the present invention.
Fig. 4 is a schematic diagram showing an example of a metal foreign matter detector used in the process step (II).
Fig. 5 is a schematic diagram showing a principle of a metal foreign matter detector used in the process step (II).

## Embodiments for carrying out the Invention

The present invention relates to a method for recovering a polycarbonate resin, containing steps of: crushing a discarded optical disk and/or a recovered optical disk, which has a polycarbonate resin substrate (crushing step); and chemically treating a resulting crushed product (chemically treating step) , and the chemically treated product is subjected to the following process steps (I) and (II):

process step (I) : a step containing steps of: (a) removing a magnetic metal foreign matter with a magnet, and (b) identifying a colored foreign matter with an optical camera, and removing the colored foreign matter, and
process step (II): a step containing detecting the presence of a metal foreign matter with a metal foreign matter detector, and removing a resin containing the metal foreign matter.

The steps will be described in sequence.

### Crushing Step

In this step, a discarded optical disk and/or a recovered optical disk, which has a polycarbonate resin substrate, is crushed. The method of crushing is not particularly limited, and the method may be performed according to a known step by utilizing a known crushing machine, such as a monoaxial crushing machine, a biaxial crushing machine, a triaxial crushing machine and a heavy crushing machine.
The crushed product thus crushed in this step preferably has an average particle diameter of from 3 to 30 mm, more preferably from 10 to 20 mm, and more preferably from 10 to 15 mm, from the standpoint of removing a foreign matter efficiently in the later step. When the average diameter is 3 mm or more, the amount of fine powder is small, and the loss on the chemical treatment may be decreased, and when the average diameter is 30 mm or less, the removal of a foreign matter in the chemical treatment described later may be performed efficiently.

### Chemically Treating Step

In this step, the crushed product obtained in the crushing step is chemically treated to remove a foreign matter (i.e., a matter other than the PC resin, which mainly includes aluminum, tellurium, antimony, copper and the like, which are metals derived from a recording film and a colorant film) from the crushed product.
A discarded optical disk and/or a recovered optical disk have "foreign layers", such as a reflective layer, a protective layer, a recording layer and a printed layer, formed on the surface of the polycarbonate substrate thereof. The foreign layers form a "foreign matter" upon regenerating and reusing the disks as a raw material of an optical disk or a raw material of a flame retardant resin composition, and thus the foreign matter is removed by the chemical treatment. The method of the chemical treatment is not particularly limited, and the chemical treatment described for the step (c) in JP-A-2007-276349 is preferred. A preferred method of the chemical treatment will be described below.
The chemical treatment is preferably a method of rinsing with an aqueous solution of a surfactant and then subjecting to an alkali treatment, from the standpoint of the efficiency of removal of a foreign matter. The crushed product may be rinsed with an aqueous solution of a surfactant, thereby removing a foreign matter attached thereto upon crushing. More specifically, it is preferred from the efficiency of removal of a foreign matter that the crushed product is (i) rinsed with an aqueous solution of a surfactant, then (ii) subjected to an alkali treatment, (iii) rinsed depending on necessity with a mixed aqueous solution of a surfactant and a peroxide for removing a colorant and a minute foreign matter reattached to the crushed product, and finally (iv) rinsed with water and dried.

### (i) Rinsing with Aqueous Solution of Surfactant

Examples of the surfactant include a nonionic surfactant, an anionic surfactant and a cationic surfactant, and in the present invention, a nonionic surfactant and an anionic surfactant are preferred.
The nonionic surfactant is preferably a polyethylene glycol ether surfactant, and polyethylene glycol ether of a higher alcohol, polyethylene glycol ether of an alkylphenol, and the like are particularly preferred. Examples of the anionic surfactant include sodium alkylbenzenesulfonate.
Upon rinsing the crushed product with an aqueous solution of a surfactant, a nonionic surfactant and an anionic surfactant are preferably used in combination as the surfactant from the standpoint of the efficiency of removal of a foreign matter.

The rinsing method is preferably a method of placing the crushed product in the aqueous solution of a surfactant, followed by agitating. In this case, the concentration of the surfactant is preferably from 0.001 to 10% by mass, and more preferably from 0.01 to 1% by mass, from the standpoint of the efficiency of removal of a foreign matter and the economic viewpoint.
The temperature on rinsing with the aqueous solution of a surfactant is preferably from 50 to 140°C, more preferably from 70 to 110°C, and further preferably from 80 to 100°C, from the standpoint of the efficiency of removal of a foreign matter and the prevention of deterioration of the PC resin.
The rinsing with the aqueous solution of a surfactant may be performed twice or more while changing the kind of the surfactant and the rinsing temperature. The period of time for rinsing with the aqueous solution of a surfactant is generally preferably from 30 to 100 minutes, and more preferably from 40 to 80 minutes, per one time of the treatment, from the standpoint of the efficiency of removal of a foreign matter and the economic viewpoint, while depending on the treating temperature, and is preferably from 40 to 100 minutes in total upon treating twice or more from the same standpoint.

(ii) Alkali Treatment

In the alkali treatment, an aqueous solution of an alkali compound (which may be hereinafter referred to as an alkali aqueous solution) is preferably used. Examples of the alkali compound include an alkali metal hydroxide, such as sodium hydroxide and potassium hydroxide; an alkaline earth metal hydroxide, such as magnesium hydroxide and calcium hydroxide; an alkali metal carbonate, such as sodium carbonate and potassium carbonate; and an alkaline earth metal carbonate, such as magnesium carbonate and calcium carbonate.
The pH of the alkali aqueous solution is preferably from 10 to 12 from the standpoint of the efficiency of removal of a foreign matter and the prevention of deterioration of the PC resin. The concentration of the alkali aqueous solution is preferably from 0.1 to 20% by mass, and more preferably from 0.3 to 10% by mass, from the standpoint of the efficiency of removal of a foreign matter and the prevention of deterioration of the PC resin. The temperature upon rinsing with the alkali aqueous solution is preferably from 100 to 140°C, and more preferably from 105 to 130°C, from the standpoint of the efficiency of removal of a foreign matter and the prevention of deterioration of the PC resin.
The alkali treatment may be performed twice or more while using alkali aqueous solutions having different concentrations or changing the temperature on the treatment, for removing a larger amount of a foreign matter.
The treating time for the alkali treatment is generally preferably from 10 to 60 minutes, and more preferably from 20 to 40 minutes, per one time of the treatment, from the standpoint of the efficiency of removal of a foreign matter and the economic viewpoint, while depending on the treating temperature, and is preferably from 20 to 100 minutes in total, and more preferably from 20 to 70 minutes in total, upon treating twice or more from the same standpoint.

(iii) Rinsing with Mixed Aqueous Solution of Surfactant and Peroxide

In the chemical treatment, the crushed product is preferably rinsed with a mixed aqueous solution of a surfactant and a peroxide (which is hereinafter referred simply to a mixed aqueous solution), after the alkali treatment (ii), from the standpoint of removal of a colorant and a minute foreign matter that are removed into the alkali aqueous solution but are reattached to the crushed product.
The surfactant used may be those described above, and the concentration of the surfactant in the mixed aqueous solution is preferably from 0.001 to 10% by mass, and more preferably from 0.01 to 1% by mass, from the standpoint of the efficiency of removal of a foreign matter and the economic viewpoint.
Examples of the peroxide include an oxide having an -O-O-bond and a peroxide of a multivalent metal, and hydrogen peroxide and a salt thereof, ozone, persulfuric acid and a salt thereof, and the like are preferred. The pH of the mixed aqueous solution is preferably from 2 to 5 from the standpoint of the efficiency of removal of a foreign matter and the prevention of deterioration of the PC resin. The concentration of the peroxide in the mixed aqueous solution is preferably from 0.1 to 10% by mass, and more preferably from 0.1 to 3% by mass, from the standpoint of the efficiency of removal of a foreign matter and the prevention of deterioration of the PC resin.
The temperature upon rinsing with the mixed aqueous solution is preferably from 65 to 95°C, and more preferably from 80 to 90°C, from the standpoint of the efficiency of removal of a foreign matter and the prevention of deterioration of the PC resin. The treating time is generally preferably from 15 to 60 minutes per one time of the treatment from the standpoint of the efficiency of removal of a foreign matter and the economic viewpoint, while depending on the treating temperature.

(iv) Step of Rinsing with Water and Drying

After the chemical treatment, the resulting chemically treated product is preferably rinsed sufficiently with water for rinsing out the rinsing liquid attached to the chemically treated product, and then sufficiently dried. The method of drying may be natural drying or drying under reduced pressure, and is preferably drying under heating. Upon drying under heating, the temperature thereon is preferably from 50 to 100°C, and more preferably from 70 to 90°C. The period

of time for drying is not particularly limited, and is preferably from 1 to 10 hours, and more preferably from 3 to 7 hours, upon drying under heating.

Process Step (I)

In the process step (I), the chemically treated product obtained through the chemical treatment step is subjected to (a) a step of removing a magnetic metal foreign matter (which mainly contains iron) with a magnet, and (b) a step of identifying a colored foreign matter with an optical camera, and removing the colored foreign matter.

Step (a)

The magnet used in the step (a) preferably has a magnetic flux density of 10,000 G or more, and from the standpoint of the efficiency of removal of a magnetic metal foreign matter and the cost of the magnet, more preferably from 10, 000 to 20, 000 G, further preferably from 10,000 to 15, 000 G, and still further preferably from 11, 000 to 13, 000. Only one magnet may be used, and two, or three or more magnets are preferably used from the standpoint of the efficiency of removal of a magnetic metal foreign matter. The size and the shape of the magnet are not particularly limited, and the magnet preferably has a rod shape (for example, a columnar body, such as a cylindrical column and a rectangular column) having a length of preferably 110% or more (more preferably 120% or more) of the width size of the shooter, through which the chemically treated product is fed from the standpoint of the efficiency of removal of a magnetic metal foreign matter.
The method of removing a magnetic metal foreign matter in the chemically treated product with a magnet is not particularly limited, and examples thereof include a method described in Fig. 2, in which the chemically treated product is conveyed with a belt conveyor 4 at a conveying speed of preferably from 5 to 15 kg/min, more preferably from 6 to 12 kg/min, and further preferably from 8 to 10 kg/min, and the magnet is fixed at a position that is remote from the chemically treated product with a distance of preferably from 0.3 to 2.5 cm, more preferably from 0.3 to 1.5 cm, and further preferably from 0.3 to 0.8 cm.
The magnetic metal foreign matter mainly contains iron, and in the case where a magnetic metal foreign matter other than iron, such as cobalt and nickel, is contained, these magnetic foreign matters may also be removed simultaneously.

Step (b)

The step (b) of identifying a colored foreign matter with an optical camera, and removing the colored foreign matter may be performed before or after the step (a), and is preferably performed after the step (a) as shown in Fig. 2, whereby a foreign matter that is mixed therein in the operation of removing the metal foreign matter from the magnet in the step (a) may be simultaneously removed in the step (b). The step (b) may be performed both before and after the step (a).
The step (b) is performed preferably in such a manner that as shown in Fig. 2, the chemically treated product having been subjected to the step (a) is conveyed with the belt conveyer 4, and the chemically treated product is made to fly at the end of the belt conveyer. As shown in Fig. 3, the flying chemically treated product is made to pass through the front of an optical camera 5. The conveying speed of the chemically treated product with the belt conveyer is preferably from 50 to 150 m/min, and more preferably from 80 to 120 m/min, from the standpoint of making the chemically treated product to fly sufficiently from the belt conveyer and the standpoint of the detection accuracy of a colored foreign matter with the optical camera.
The optical camera used in the step (b) is preferably a CCD camera. As the optical camera, two, or three or more cameras are preferably used from the standpoint of the efficiency of removal of a colored foreign matter, and it is more preferred that at least two optical cameras are disposed vertically with the flying chemically treated product passing between them.
As shown in Fig. 3, the flying chemically treated product is inspected with the optical camera, and the chemically treated product that is determined as a colored foreign matter with a control unit 10 is removed by blowing away with an air stream (having a wind pressure of preferably from 0.2 to 0.6 MPa, and more preferably from 0.3 to 0.5 MPa, from the standpoint of removing a colored foreign matter sufficiently and the standpoint of preventing removal of the normal chemically treated product) blown from an ejector. At this time, the chemically treated product around the colored foreign matter may also be removed simultaneously.
Fig. 3 will be described in brief. The chemically treated product conveyed with the belt conveyer 8 is made to fly from the belt conveyer 8, and is inspected with the CCD camera through a back panel 11 while being illuminated with an illumination for a three-CCD camera. The chemically treated product is determined as to whether or not it is a colored foreign matter with the control unit 10, and in the case where the chemically treated product is determined as a colored foreign matter, it is blown away with an air stream from the ejector 12 and thrown into a removed matter dispensing port 14. The chemically treated product that is not determined as a colored foreign matter is taken out from a product

dispensing port 13.

The polycarbonate resin obtained in the process step (I) preferably has, as a foreign matter, a content of sodium decreased to 0.5 ppm or less, a content of iron decreased to 1 ppm or less, and a content of a metal derived from a recording film or a colorant film of an optical disk (for example, aluminum, tellurium, antimony, copper and the like) decreased to 0.1 ppm or less, but the conditions may not be necessarily satisfied in practice only with the process step (I). For providing a polycarbonate resin with considerably high purity in the present invention, the process step (II) described later is also performed.

In the present invention, the unit "ppm" means "ppm by mass" unless otherwise indicated.

Process Step (II)

In the process step (II), the presence of a metal foreign matter is detected with a metal foreign matter detector, and the resin containing the metal foreign matter is removed. Only a slight amount of a metal foreign matter that has been failed to be removed until the process step (I) can be removed in the process step (II), and therefore the process step (II) is preferably performed after the process step (I).

In the process step (II), it is preferred as shown in Fig. 4 that the polycarbonate resin obtained in the process step (I) is conveyed to a metal foreign matter detector with a conveying belt 16, and the presence of a metal foreign matter is continuously detected. The metal foreign matter is preferably detected with a magnetic flux line. As shown in Fig. 5, a magnetic metal is magnetized upon passing through the metal foreign matter detector, and the magnetic flux line is attracted to the metal, thereby detecting the magnetic metal, and a nonmagnetic metal forms an eddy current upon passing through the metal foreign matter detector, and the magnetic flux line is consumed as heat energy, thereby detecting the nonmagnetic metal.

The metal foreign matter detector is preferably capable of detecting a metal foreign matter contained in the polycarbonate resin in an amount of 0.1 ppm or more.

The conveying speed of the conveying belt is preferably from 40 to 100 m/min, and more preferably from 50 to 80 m/min, and the amount of the polycarbonate resin on the conveying belt is preferably from 0.05 to 0.3 kg/m, and more preferably from 0.1 to 0.2 kg/m, from the standpoint of the detection accuracy of a metal foreign matter and the processing speed.

Upon detecting a metal foreign matter with the metal foreign matter detector, the polycarbonate resin in the vicinity of the metal foreign matter detected (preferably within a range of 100 cm in the machine direction, and more preferably within a range of 50 cm in the machine direction, with respect to the detected position as center) is removed (for example, discarded). In the case where it is difficult to remove only the vicinity of the metal foreign matter in view of the production process, a product bag containing the polycarbonate resin, in which a metal foreign matter was detected, may be removed (for example, discarded).

Upon performing the process step (II), for example, the use of a metal foreign matter detector, such as "Super Mepoly III" (produced by Anritsu Corporation), is convenient and preferred.

It is industrially preferred that the chemically treated product is continuously fed to the process step (I), and the process step (I) and the process step (II) are each performed continuously, whereby the polycarbonate resin can be recovered continuously.

The polycarbonate resin obtained by subjecting to the process step (I) and the process step (II) (which is hereinafter referred to as a recovered polycarbonate resin (A-1)) may have, as a foreign matter, a sodium content of 0.5 ppm or less (preferably 0.3 ppm or less, which is approximately from 0.05 to 0.3 ppm), an iron content of 1 ppm or less (preferably 0.5 ppm or less, and more preferably 0.3 ppm or less, which is approximately from 0.05 to 0.3 ppm), and a content of a metal, which is derived from a recording film or a colorant film (for example, aluminum, tellurium, antimony, copper and the like), of 0.1 ppm or less. The use of a recovered polycarbonate resin that has a larger residual metal amount than the above may deteriorate the impact resistance, the flame retardancy, the hygrothermal characteristics and the like.

The recovered polycarbonate resin (A-1) thus obtained always provides stably an optical molded article with high quality, and thus can be used as equivalent to an ordinary polycarbonate resin for an optical disk.

The present invention also provides an optical polycarbonate resin containing from 5 to 100% by mass of the recovered polycarbonate resin (A-1) and from 95 to 0% by mass of a virgin optical polycarbonate resin. The present invention preferably provides an optical polycarbonate resin containing from 20 to 80% by mass of the recovered polycarbonate resin (A-1) and from 80 to 20% by mass of a virgin optical polycarbonate resin, and more preferably provides an optical polycarbonate resin containing from 30 to 70% by mass of the recovered polycarbonate resin (A-1) and from 70 to 30% by mass of a virgin optical polycarbonate resin.

Flame Retardant Polycarbonate Resin Composition (1)

One of the flame retardant polycarbonate resin composition of the present invention is a flame retardant polycarbonate resin composition containing 100 parts by mass of a resin component containing from 50 to 95% by mass of

a polycarbonate resin (A) containing the recovered polycarbonate resin (A-1) and from 50 to 5% by mass of an amorphous styrene resin (B), and from 1 to 20 parts by mass of a non-halogen-containing phosphate ester compound (C).
The polycarbonate resin (A) contains the recovered polycarbonate resin (A-1) obtained above, and in addition to the recovered polycarbonate resin (A-1), a polycarbonate resin that is ordinarily commercially available may be used. The viscosity average molecular weight thereof is preferably from 14,000 to 60,000.
The content of the recovered polycarbonate resin (A-1) in the polycarbonate resin (A) is preferably from 5 to 95% by mass, more preferably from 5 to 90% by mass, more preferably from 10 to 90% by mass, further preferably from 5 to 70% by mass, still further preferably from 5 to 50% by mass, and particularly preferably from 10 to 50% by mass.

The amorphous styrene resin (B) is used for improving the molding processability of the polycarbonate, and examples thereof include a polymer obtained by polymerizing a monomer or a monomer mixture containing from 20 to 100% by mass of a monovinyl aromatic monomer, such as styrene and $\alpha$-methylstyrene, from 0 to 60% by mass of a cyanide vinyl monomer, such as acrylonitrile and methacrylonitrile, and from 0 to 50% by mass of a vinyl monomer capable of being copolymerized therewith, such as maleimide and methyl (meth)acrylate. Examples of the polymer include polystyrene (GPPS) and an acrylonitrile-styrene copolymer (AS resin).
The amorphous styrene resin (B) used preferably has a melt flow rate (MFR) of from 5 to 150, more preferably from 10 to 130, and further preferably from 15 to 100, at 200°C and a load of 5 kg. When the melt flow rate (MFR) is 5 or more, sufficient flowability may be obtained, and when it is 150 or less, the flame retardant polycarbonate resin composition may have good impact resistance.

As the amorphous styrene resin (B), a rubber-modified styrene resin is preferably used. Preferred examples of the rubber-modified styrene resin include an impact-resistant styrene resin containing at least a styrene monomer graft-polymerized to rubber. Examples of the rubber-modified styrene resin include high impact polystyrene (HIPS) containing rubber, such as polybutadiene, having styrene polymerized therewith, an ABS resin containing polybutadiene having acrylonitrile and styrene polymerized therewith, and an MBS resin containing polybutadiene having methyl methacrylate and styrene polymerized therewith. The rubber-modified styrene resin may be used as a mixture of two or more kinds thereof or as a mixture with the aforementioned styrene resin, which is not modified with rubber.
Among these, the amorphous styrene resin (B) is preferably a copolymer of styrene with "acrylonitrile and/or methyl methacrylate", which are polymerized in the presence or absence of a rubber polymer. Particularly preferred examples thereof include 290FF (produced by Techno Polymer Co., Ltd.), S100N (produced by UMG ABS, Ltd.) and PN-117C (produced by Chi Mei Corporation) for an AS resin, and Santac AT-05 and SXH-330 (all produced by Nippon A&L, Inc.), Toyolac 500 and 700 (produced by Toray Industries, Inc.) and PA-757 (produced by Chi Mei Corporation) for an ABS resin.

Specific examples of the rubber include a rubber polymer containing polybutadiene and (meth)acrylate, styrene-butadiene-styrene rubber (SBS), styrene-butadiene rubber (SBR), butadiene-acrylic rubber, isoprene rubber, isoprene-styrene rubber, isoprene-acrylic rubber, and ethylene-propylene rubber. Among these, polybutadiene is particularly preferred. Polybutadiene used herein may be either low-cis polybutadiene (for example, containing from 1 to 30% by mol of a 1,2-vinyl bond and from 30 to 42% by mol of a 1,4-cis bond) or high-cis polybutadiene (for example, 20% by mol or less of a 1,2-vinyl bond and 78% by mol or more of a 1,4-cis bond), and may also be a mixture thereof.
The content ratio of the polycarbonate resin (A) and the amorphous styrene resin (B) ((A)/(B)) in terms of mass ratio may be from 50/50 to 95/5% by mass, more preferably from 55/45 to 90/10, further preferably from 60/40 to 90/10, and particularly preferably from 60/40 to 80/20. When the amount of the amorphous styrene resin exceeds 50% by mass, the heat resistance, the flame retardancy, and the mechanical strength, such as the impact resistance, of the flame retardant polycarbonate resin composition may be deteriorated, and when the amount of the amorphous styrene resin is less than 5% by mass, the flowability of the flame retardant polycarbonate resin composition may be deteriorated, thereby imparting the molding processability, and the chemical resistance thereof may be deteriorated.

Examples of the non-halogen-containing phosphate ester compound (C) include a phosphate ester compound represented by the following general formula (1):

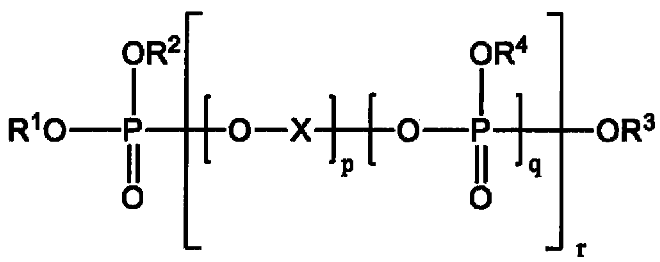

(1)

In the general formula (1), $R^1$, $R^2$, $R^3$ and $R^4$ each independently represent a hydrogen atom or an organic group; X represents a divalent or higher valent organic group; p represents 0 or 1; q represents an integer of 1 or more, and r

represents a number of 0 or more.
p is preferably 1. q is preferably an integer of from 1 to 10, more preferably an integer of from 1 to 5, further preferably 1 or 2, and particularly preferably 1. r is preferably an integer of from 0 to 10, more preferably an integer of from 1 to 5, further preferably 1 or 2, and particularly preferably 1.

In the general formula (1), the organic group is a substituted or unsubstituted alkyl group having from 1 to 20 carbon atoms, a substituted or unsubstituted cycloalkyl group having from 3 to 20 carbon atoms, a substituted or unsubstituted aryl group having from 6 to 20 carbon atoms, and the like. Examples of the alkyl group having from 1 to 20 carbon atoms include a methyl group, an ethyl group, a n-propyl group, an isopropyl group, a n-butyl group, a s-butyl group, a t-butyl group, various hexyl groups (the term "various" means all the groups including linear groups and branched groups, and hereinafter the same applies), various octyl groups, various decyl groups, various dodecyl groups, various tetradecyl groups, various hexadecyl groups, various nonadecyl groups and various eicosyl groups. Among these, an alkyl group having from 1 to 10 carbon atoms is preferred, and an alkyl group having from 1 to 5 carbon atoms is more preferred. Examples of the cycloalkyl group having from 3 to 20 carbon atoms include a cyclopropyl group, a cyclopentyl group and a cyclooctyl group. Among these, a cycloalkyl group having from 3 to 10 carbon atoms is preferred, and a cycloalkyl group having from 3 to 6 carbon atoms is more preferred. Examples of the aryl group having from 6 to 20 carbon atoms include a phenyl group, a naphthyl group and an anthryl group. Among these, an aryl group having from 6 to 14 carbon atoms is preferred, an aryl group having from 6 to 10 carbon atoms is more preferred, and a phenyl group is further preferred.
The organic group is preferably a substituted or unsubstituted aryl group having from 6 to 20 carbon atoms.
Examples of the substituent when the group is substituted include an alkyl group having from 1 to 10 (preferably from 1 to 5) carbon atoms, an alkoxy group having from 1 to 10 (preferably from 1 to 5) carbon atoms, an aryl group having from 6 to 14 (preferably from 6 to 10) carbon atoms, an aryloxy group having from 6 to 14 (preferably from 6 to 10) carbon atoms, and an arylthio group having from 6 to 14 (preferably from 6 to 10) carbon atoms. Examples of the substituent also include an arylalkoxyalkyl group and the like, which are formed by combining the aforementioned groups, and an arylsulfonylaryl group and the like, which are formed by bonding the substituents through an oxygen atom, a nitrogen atom, a sulfur atom or the like.
In the general formula (1), the divalent or higher valent organic group X means a divalent or higher valent group formed by removing one or more hydrogen atoms bonded to the carbon atoms of the organic group mentioned above. Examples thereof include an alkylene group, a (substituted) phenylene group, and a group derived from a bisphenol compound, which is a polynuclear phenol compound. Preferred examples thereof include group derived from bisphenol A, hydroquinone, resorcinol, diphenylmethane, dihydroxydiphenyl and dihydroxynaphthalene, and a group derived from bisphenol A is more preferred.

The non-halogen-containing phosphate ester compound (C) may be a monomer, an oligomer, a polymer or a mixture thereof. Specific examples thereof include trimethyl phosphate, triethyl phosphate, tributyl phosphate, trioctyl phosphate, tributoxyethyl phosphate, triphenyl phosphate, tricresyl phosphate, cresyl phenyl phosphate, octyl diphenyl phosphate, tri(2-ethylhexyl) phosphate, diisopropyl phenyl phosphate, trixylenyl phosphate, tris(isopropylphenyl) phosphate, trinaphthyl phosphate, bisphenol A bisphosphate, hydroquinone bisphosphate, resorcin bisphosphate, resorcinol diphenyl phosphate, trioxybenzene triphosphate, cresyl diphenyl phosphate, and substituted compounds and condensed compounds thereof.

The non-halogen-containing phosphate ester compound (C) used in the present invention is not particularly limited in terms of flame retardancy, and in some cases, preferably has a monomer content of 3% by mass or less from the standpoint of the prevention of attachment to the mold in the case where a thin molded article is molded at a high temperature. Furthermore, in some cases, the non-halogen-containing phosphate ester compound (C) preferably has an acid value of 1 mgKOH/1 g or less measured according to JIS K6715 from the standpoint of the heat stability. Moreover, in some cases, the use of a phosphate ester compound having a substituent, such as an alkyl group, on phenol is preferred from the standpoint of the moisture resistance and the heat resistance.

Examples of the commercially available non-halogen-containing phosphate ester compound (C) include TPP (triphenyl phosphate), TXP (trixylenyl phosphate), CR-733S (resorcinol bis(diphenyl phosphate)), CR741 (bisphenol A bis(diphenyl phosphate)), PX200 (1,3-phenylene tetrakis(2,6-dimethyphenyl) phosphate, PX201 (1,4-phenylene tetrakis (2,6-dimethyphenyl) phosphate, and PX202 (4,4'-biphenylene tetrakis(2,6-dimethyphenyl) phosphate) all produced by Dai-hachi Chemical Industry Co., Ltd..
The content of the non-halogen-containing phosphate ester compound (C) in the flame retardant polycarbonate resin composition of the present invention may be from 1 to 20 parts by mass, preferably from 5 to 20 parts by mass, more preferably from 5 to 15 parts by mass, and further preferably from 10 to 15 parts by mass, per 100 parts by mass of the resin component containing the components (A) and (B). When the content of the component (C) is less than 1 part by mass, the resulting polycarbonate compound may fail to exhibit the desired flame retardancy, and when it exceeds 20 parts by mass, the heat resistance of the flame retardant polycarbonate resin composition may be deteriorated.

The flame retardant polycarbonate resin composition of the present invention may further contain an inorganic

filler (D) for enhancing the rigidity and the flame retardancy of the molded article.

Examples of the inorganic filler (D) include talc, mica, kaolin, wollastonite, diatom earth, calcium carbonate, calcium sulfate, barium sulfate, glass fibers, carbon fibers and potassium titanate fibers. These materials may be used solely or as a combination of two or more kinds thereof. Among these, talc, mica, wollastonite, glass fibers and carbon fibers are preferred. Furthermore, talc and mica, which are in the tabular form, and a fibrous filler are more preferred.

Talc is a hydrated silicate salt of magnesium, and products that are ordinarily commercially available may be used. Talc may contain, in addition to silicic acid and magnesium oxide as major components, small amounts of aluminum oxide, calcium oxide and iron oxide, and talc containing them may be used. The average particle diameter of the inorganic filler, such as talc, is preferably from 0.1 to 50 $\mu$m, and more preferably from 0.2 to 20 $\mu$m. The addition of the inorganic filler, particularly talc, enhances the rigidity and also decreases the mixed amount of the non-halogen-containing phosphate ester compound (C) as a flame retardant.

In the case where the flame retardant polycarbonate resin composition of the present invention contains the inorganic filler (D), the content thereof is generally preferably from 1 to 40 parts by mass, and more preferably from 5 to 30 parts by mass, per 100 parts by mass of the resin component containing the components (A) and (B). When the content thereof is 1 part by mass or more, the effect of improving the molding shrinkage ratio, the rigidity and the like is obtained, and when it is less than 40 parts by mass, the specific gravity may not be increased, and the impact resistance may be prevented from being decreased.

The flame retardant polycarbonate resin composition of the present invention may further contain an impact resistance improving agent (E) for further enhancing the impact resistance. As the impact resistance improving agent (E), a rubber elastomer is preferably used, and examples thereof include polybutadiene, polyisoprene, styrene-butadiene-styrene rubber (SBS), styrene-butadiene rubber (SBR), butadiene-acrylic rubber, isoprene-styrene rubber, isoprene-acrylic rubber, ethylene-propylene rubber, ethylene-propylene-diene rubber, siloxane rubber and a core-shell type elastomer. As the impact resistance improving agent (E) among these, a core-shell type elastomer is preferably used. The core-shell type elastomer has a two-layer structure containing a core and a shell, in which the core part is in a soft rubber state, and the shell part on the surface thereof is in a hard resin state (graft layer), and the elastomer itself is in the form of powder (particle state) . The core-shell type elastomer maintains the most of the particle state thereof after melt-mixing with the polycarbonate resin. The core-shell type elastomer mixed therein that maintains the most of the particle state thereof provides the effect of preventing the surface layer from being released.

Examples of the core-shell type elastomer include polybutadiene, polyisoprene, styrene-butadiene-styrene rubber (SBS), styrene-butadiene rubber (SBR), butadiene-acrylic rubber, isoprene-styrene rubber, isoprene-acrylic rubber, ethylene-propylene rubber, ethylene-propylene-diene rubber and siloxane rubber, and also include those obtained from a monomer mainly containing an alkyl (meth)acrylate and dimethylsiloxane. The core of the core-shell type elastomer is preferably polybutadiene.

The alkyl (meth)acrylate is preferably one having an alkyl group having from 2 to 10 carbon atoms, and specific examples thereof include ethyl acrylate, butyl acrylate, 2-ethylhexyl acrylate and n-octyl methacrylate. Examples of the rubber elastomer obtained from a monomer mainly containing the alkyl (meth) acrylate include a polymer obtained by reacting 70% by mass or more (for example, from 70 to 95% by mass) of an alkyl (meth) acrylate with 30% by mass or less (for example, from 30 to 5% by mass) of a vinyl monomer capable of being copolymerized therewith (for example, methyl methacrylate, acrylonitrile, vinyl acetate and styrene). In this case, a polyfunctional monomer, such as divinylbenzene, ethylene glycol dimethacrylate, triallyl cyanurate and triallyl isocyanurate, may be appropriately added and reacted as a crosslinking agent.

Examples of the vinyl monomer to be reacted in the presence of a rubber polymer for forming the shell include an aromatic vinyl compound, such as styrene and $\alpha$-methylstyrene; an acrylate ester, such as methyl acrylate and ethyl acrylate; and a methacrylate ester, such as methyl methacrylate and ethyl methacrylate. Among these, a methacrylate ester is preferred, and methyl methacrylate (MMA) is more preferred. The monomer may be used solely or as a combination of two or more kinds thereof, and may also be copolymerized with another vinyl monomer, for example, a vinyl cyanide compound, such as acrylonitrile and methacrylonitrile, and a vinyl ester compound, such as vinyl acetate and vinyl propionate.

The polymerization reaction may be performed by various methods, such as block polymerization, suspension polymerization and emulsion polymerization. An emulsion polymerization method is particularly preferred.

There are various products for the core-shell type elastomer. Examples of the commercially available products thereof include EXL2602, EXL2603, EXL2620 and KM-330 (produced by Rohm & Haas Japan Co., Ltd.), and Metablen S2001, Metablen S2006, Metablen S2100, Metablen C223A and Metablen W450A (produced by Mitsubishi Rayon Co., Ltd.).

In the case where the flame retardant polycarbonate resin composition of the present invention contains the impact resistance improving agent (E), the content thereof is preferably from 1 to 20 parts by mass, more preferably from 1 to 15 parts by mass, and further preferably from 1 to 10 parts by mass, per 100 parts by mass of the resin component containing the components (A) and (B). When the impact resistance improving agent (E) is contained in an amount of 1 part by mass or more, the impact resistance may be improved, and when the content is 20 parts by mass

or less, there is less possibility of decrease of the flame retardancy.

The flame retardant polycarbonate resin composition of the present invention may further contain a polyfluoroolefin resin (F). The component (F) may function as a dripping preventing agent.

The polyfluoroolefin resin (F) is preferably polytetrafluoroethylene (PTFE), which is useful as a melt dripping preventing agent. The average molecular weight of the polytetrafluoroethylene is preferably 500,000 or more, and particularly preferably from 500,000 to 1,000,000. The known all kinds of polytetrafluoroethylene may be used as the polytetrafluoroethylene used in the present invention.

Polytetrafluoroethylene that has a fibril-forming capability is preferably used. The polytetrafluoroethylene having a fibril-forming capability is not particularly limited, and examples thereof include those classified into Type 3 in ASTM. Specific examples of those classified into Type 3 include Teflon (a trade name) 6-J (produced by Du Pont-Mitsui Fluorochemicals Co., Ltd.), Polyflon D-1, Polyflon F-103 and Polyflon F201 (produced by Daikin Industries, Ltd.), and CD076 (produced by Asahi Glass Co., Ltd.). Examples of those that are not classified into Type 3 include Algoflon F5 (produced by Solvay Solexis Company) and Polyflon MPA and Polyflon FA-100 (produced by Daikin Industries, Ltd.). These kinds of polytetrafluoroethylene (PTFE) may be used solely or as a combination of two or more kinds thereof.

The polytetrafluoroethylene having a fibril-forming capability may be obtained, for example, by polymerizing tetrafluoroethylene in an aqueous solvent in the presence of sodium, potassium and ammonium peroxydisulfide under a pressure of from 0.005 to 1 MPa at a temperature of from 0 to 200°C, and preferably from 20 to 100°C.

In the case where the flame retardant polycarbonate resin composition of the present invention contains the polyfluoroolefin resin (F), the content thereof is preferably from 0.05 to 2 parts by mass, and more preferably from 0.1 to 1 part by mass, per 100 parts by mass in total of the components (A) and (B). When the content of the polyfluoroolefin resin (F) is 0.1 part by mass or more, the melt dripping preventing effect is obtained upon combustion, and when the content is 2 parts by mass or less, decrease of the impact strength and the appearance failure may be prevented from occurring.

In the flame retardant polycarbonate resin composition of the present invention, the components (D) to (F) and an additive that is ordinarily used in a thermoplastic resin may be added to the essential components (A) to (C) depending on necessity for such purposes as enhancement of the moldability, the impact resistance, the appearance, the weather resistance, the rigidity and the like, in such a range that the advantages of the present invention are not impaired. Examples of the additive include a phenol, phosphorus or sulfur antioxidant, an antistatic agent, a polyamide-polyether block copolymer (imparting a permanent antistatic capability), a benzotriazole or benzophenone ultraviolet ray absorbent, a hindered amine light stabilizer (weather resisting agent), a releasing agent, a plasticizer, an antibacterial agent, a compatibility improving agent, and a colorant (such as a dye and a pigment).

The production method of the flame retardant polycarbonate resin composition (1) of the present invention will be described.

The flame retardant polycarbonate resin composition (1) of the present invention may be obtained by mixing and kneading the components (A) to (C) at the aforementioned ratios and other optional components including the components (D) to (F) at appropriate ratios. The mixing and kneading operation herein may be performed by using an ordinary equipment. For example, the components may be preliminarily mixed with a ribbon blender, a drum blender or the like, and then a Henschel mixer, a Banbury mixer, a single screw extruder, a double screw extruder, a multiple screw extruder, a co-kneader or the like is used. However, as described above, the use of a continuous extrusion molding machine, such as a single screw extrusion molding machine and a multiple screw extrusion molding machine, that is a type of performing forced ventilation is preferred. As the extrusion molding machine, such a type is preferred that has plural raw material feeding parts in the flow direction of the raw material for molding. Examples of the method include a method of melt kneading the raw material components other than the phosphate ester compound (C), and then feeding the phosphate ester compound (C) to the kneaded product preferably in a molten state, and a method of melt kneading the polycarbonate resin (A) and the phosphate ester compound (C), and then kneading with the amorphous styrene resin (B). The recovered polycarbonate resin (A-1) may be kneaded with the other polycarbonate resin in advance, or may be kneaded with the other components simultaneously.

The heating temperature upon melt kneading may be generally appropriately selected from a range of from 240 to 300°C. The components other than the polycarbonate resin (A) and the amorphous styrene resin (B) may be added in the form of a master batch formed by melt kneading with the polycarbonate resin, the styrene resin, or other thermoplastic resin in advance.

The flame retardant polycarbonate resin composition (1) of the present invention may be formed into various molded articles with the melt kneading molding machine, or by using resulting pellets as a raw material, by an injection molding method, an injection compression molding method, an extrusion molding method, a blow molding method, a press molding method, a vacuum molding method, a expansion molding method or the like.

The flame retardant polycarbonate resin composition (1) of the present invention may be preferably applied to production of an injection molded article in such a manner that the composition molding raw material in the form of pellets obtained by the melt kneading method is molded by injection molding or injection compression molding. As the injection molding method, gas injection molding may be employed for preventing surface dents or for reducing the weight.

The flame retardant polycarbonate resin composition (1) of the present invention may be favorably used for molding not only a direct gate type, but also a molded article using a hot runner mold, owing to the excellent heat stability thereof. In a hot runner mold, the resin is liable to suffer heat history due to residence of the molten resin in the hot runner, which may result in generation of gas and coloration due to decomposition of the resin and the additives, and thus it is difficult to mold a molded article having good appearance. However, the present invention solves the problem. Accordingly, the flame retardant polycarbonate resin composition of the present invention may enable molding of a thin molded article and a large sized molded article irrespective of the shape of the mold.
The present invention also provides an injection molded article containing the flame retardant polycarbonate resin composition (1) of the present invention.
Examples of the injection molded article (including the injection compression molding article) obtained from the flame retardant polycarbonate resin composition (1) of the present invention include a housing and various parts of an electric or electronic apparatus, such as a duplicator, a facsimile machine, a personal computer, a printer, a television set, a radio receiver, a tape recorder, a video cassette recorder, a telephone set, an information terminal, a refrigerator and a microwave oven, and the resin composition may also be applied to other fields including an automobile part.

Flame Retardant Polycarbonate Resin Composition (2)

Another one of the flame retardant polycarbonate resin composition of the present invention is a flame retardant polycarbonate resin composition containing 100 parts by mass of a polycarbonate resin mixture (A') containing from 5 to 95% by mass of the recovered polycarbonate resin (A-1), from 95 to 5% by mass of a polycarbonate-polyorganosiloxane copolymer (A-2) and from 0 to 90% by mass of a virgin aromatic polycarbonate resin (A-3) other than the polycarbonate-polyorganosiloxane copolymer, and from 0.01 to 5 parts by mass of a polyfluoroolefin resin (F). The recovered polycarbonate resin (A-1) has been described.

Polycarbonate-Polyorganosiloxane Copolymer (A-2)

The polycarbonate-polyorganosiloxane copolymer (A-2) contains a polycarbonate part formed of a polycarbonate resin and a polyorganosiloxane part, and a virgin polycarbonate-polyorganosiloxane copolymer is generally used therefor.
The polycarbonate-polyorganosiloxane copolymer may be produced, for example, in such a manner that a polycarbonate oligomer constituting the polycarbonate part and a polyorganosiloxane having a reactive group, such as an o-allylphenol residual group, a p-hydroxystyrene residual group and an eugenol residual group, at the ends thereof constituting the polyorganosiloxane part (segment), which are produced in advance, are dissolved in a solvent, such as methylene chloride, chlorobenzene or chloroform, to which a caustic alkali aqueous solution of a dihydric phenol compound is added, and interfacial polycondensation is performed by using a tertiary amine (such as triethylamine) or a quaternary ammonium salt (such as trimethylbenzene ammonium chloride) used as a catalyst, in the presence of a termination agent. The polycarbonate oligomer used for producing the polycarbonate-polyorganosiloxane copolymer may be conveniently produced, for example, by reacting the dihydric phenol compound with a carbonate precursor, such as phosgene, or reacting with the dihydric phenol compound with a carbonate ester compound, for example, a carbonate precursor, such as diphenyl carbonate, in a solvent, such as methylene chloride. Examples of the carbonate ester compound include a diaryl carbonate, such as diphenyl carbonate, and a dialkyl carbonate, such as dimethyl carbonate and diethyl carbonate.
The polycarbonate oligomer used for producing the polycarbonate-polyorganosiloxane copolymer may be a homooligomer containing one kind of the dihydric phenol compound or may be an oligomer containing two or more kinds thereof. The polycarbonate oligomer may also be a thermoplastic random branched oligomer obtained by using a polyfunctional aromatic compound in combination with the dihydric phenol compound.
In this case, examples of the branching agent (i.e., the polyfunctional aromatic compound) used include 1,1,1-tris(4-hydroxyphenyl)ethane,
α,α',α"-tris(4-hydroxyphenyl)-1,3,5-triisopropylbenzene, 1-(α-methyl-α-(4'-hydroxyphenyl)ethyl)-4-(α',α'-bis(4''-hydroxyphenyl)ethyl)benzene, phloroglucin, trimellitic acid and isatin bis(o-cresol).
The polycarbonate-polyorganosiloxane copolymer is disclosed, for example, in JP-A-3-292359, JP-A-4-202465, JP-A-8-81620, JP-A-8-302178 and JP-A-10-7897.
The polyorganosiloxane part of the polycarbonate-polyorganosiloxane copolymer is preferably a segment formed of polydimethylsiloxane, polydiethylsiloxane, polymethylphenylsiloxane or the like, and a polydimethylsiloxane segment is particularly preferred.
The polycarbonate-polyorganosiloxane copolymer (A-2) used in the present invention preferably has a polymerization degree of the polyorganosiloxane part of approximately from 10 to 1,000, more preferably approximately from 20 to 500, and further preferably approximately from 20 to 300.
The polycarbonate-polyorganosiloxane copolymer (A-2) generally preferably has a viscosity average molecular weight

(Mv) of from 12,000 to 100,000, more preferably from 14,000 to 50,000, and further preferably from 15,000 to 30,000. The viscosity average molecular weight (Mv) herein is obtained by measuring a methylene chloride solution for viscosity at 20°C with an Ubbelohde viscometer, from which the limiting viscosity [η] is obtained, and calculating the viscosity average molecular weight according to the following expression.

$$[\eta] = 1.23 \times 10^{-5} Mv^{0.83}$$

The virgin aromatic polycarbonate resin (A-3) other than the polycarbonate-polyorganosiloxane copolymer (A-2) will be described.

The virgin aromatic polycarbonate resin (A-3) is a virgin aromatic polycarbonate resin other than the component (A-2), and means an aromatic polycarbonate resin that is not a recovered product. The production method thereof is not particularly limited, and those produced from a conventional method may be used. For example, those produced from a dihydric phenol compound and a carbonate precursor by a solution method (interfacial polycondensation method) or a melting method (ester exchange method), i.e., those obtained by an interfacial polycondensation method, in which a dihydric phenol compound and phosgene are reacted in the presence of a terminating agent, or by an ester exchange method, in which a dihydric phenol compound and diphenyl carbonate or the like are reacted in the presence of a terminating agent, may be used.

Examples of the dihydric phenol compound include various compounds, and particularly include 2-bis(4-hydroxyphenyl) propane (bisphenol A), bis(4-hydroxyphenyl)methane, 1,1-bis(4-hydroxyphenyl)ethane, 2,2-bis(4-hydroxy-3,5-dimethylphenyl)propane, 4,4'-dihydroxydiphenyl, bis(4-hydroxyphenyl)cycloalkane, bis(4-hydroxyphenyl) oxide, bis(4-hydroxyphenyl) sulfide, bis(4-hydroxyphenyl)sulfone, bis(4-hydroxyphenyl) sulfoxide and bis(4-hydroxyphenyl) ketone. Examples thereof also include hydroquinone, resorcin and catechol. These compounds may be used solely or as a combination of two or more kinds thereof, and among these, a bis(hydroxyphenyl)alkane compound is preferred, and bisphenol A is particularly preferred.

Examples of the carbonate precursor include a carbonyl halide, a carbonyl ester and a haloformate, and specific examples thereof include phosgene, a dihaloformate of a dihydric phenol compound, diphenyl carbonate, dimethyl carbonate and diethyl carbonate.

The virgin aromatic polycarbonate resin (A-3) may have a branched structure, and examples of the branching agent include 1,1,1-tris(4-hydroxyphenyl)ethane, a,a',a" -tris(4-hydroxyphenyl)-1,3,5-triisopropylbenzene, phloroglucin, trimellitic acid and isatin bis(o-cresol).

In the present invention, the virgin aromatic polycarbonate resin (A-3) generally preferably has a viscosity average molecular weight (Mv) of from 10,000 to 50,000, more preferably from 13,000 to 35, 000, and further preferably from 15,000 to 30,000. The viscosity average molecular weight (Mv) herein may be obtained in the same manner as in the case of the component (A-2).

In the virgin aromatic polycarbonate resin (A-3), a molecular weight regulating agent is used as a molecular terminal group. The molecular weight regulating agent may be those generally used for polymerization of a polycarbonate resin, and various monohydric phenol compounds may be used. Specific examples thereof include phenol, p-cresol, p-tert-butylphenol, p-tert-octylphenol, p-cumylphenol, bromophenol, tribromophenol and nonylphenol.

As the virgin aromatic polycarbonate resin (A-3) , two or more kinds of the virgin aromatic polycarbonate resins may be used in combination depending on necessity.

In the polycarbonate resin mixture (A') containing the recovered polycarbonate resin (A-1), the polycarbonate-polyorganosiloxane copolymer (A-2) and the virgin aromatic polycarbonate resin (A-3) other than the polycarbonate-polyorganosiloxane copolymer (A-2), the amount of the component (A-1) is from 5 to 95% by mass, preferably from 10 to 60% by mass, and more preferably from 20 to 50% by mass, the amount of the component (A-2) is from 95 to 5% by mass, preferably from 90 to 40% by mass, and more preferably from 80 to 50% by mass, and the amount of the component (A-3) is from 0 to 90% by mass, preferably from 0 to 50% by mass, and more preferably from 0 to 30% by mass, from the standpoint of the enhancement of the flame retardancy by the addition of the polyorganosiloxane and the significance of the use of the recovered polycarbonate resin.

In the polycarbonate resin mixture (A'), the content of the polyorganosiloxane is preferably from 0.4 to 10% by mass, more preferably from 0.4 to 8% by mass, and further preferably from 0.8 to 6% by mass, from the standpoint of the balance among the flame retardancy imparting effect and the impact resistance imparting effect to the resulting flame retardant polycarbonate resin composition (2) and the economic viewpoint.

The polycarbonate-polyorganosiloxane copolymer (A-2) used may have a higher content of the polyorganosiloxane component exceeding 10% by mass, but the amounts of the components (A-1) and (A-3) used are preferably controlled to make the polyorganosiloxane content in the polycarbonate resin mixture (A') of 10% by mass or less from the standpoint of imparting flame retardancy to the resin composition.

In the case where the polycarbonate-polyorganosiloxane copolymer (A-2) that has a low content of the polyorganosiloxane component (for example, less than 1% by mass) is used, the amounts of the components (A-1) and (A-3) used are preferably decreased to make the polyorganosiloxane content in the polycarbonate resin mixture (A') of 0.4% by mass or more from the standpoint of imparting flame retardancy to the resin composition.

The polycarbonate resin mixture (A') generally has a viscosity average molecular weight of from 12, 000 to 100, 000, preferably from 14,000 to 50,000, and more preferably from 17,000 to 30,000. The amounts of the components (A-1), (A-2) and (A-3) used are preferably controlled to make the viscosity average molecular weight of the polycarbonate resin mixture (A') within the range.

The flame retardant polycarbonate resin composition (2) of the present invention further contains a polyfluoroolefin resin (F). The same details as above may be applied to the polyfluoroolefin resin (F).

In the case where the flame retardant polycarbonate resin composition (2) of the present invention contains the polyfluoroolefin resin (F), the content thereof is from 0.01 to 5 parts by mass, preferably from 0.1 to 2 parts by mass, and more preferably from 0.1 to 1 part by mass, per 100 parts by mass of the polycarbonate resin mixture (A'), from the standpoint of the balance among the dripping preventing effect, the appearance failure and the impact strength.

The flame retardant polycarbonate resin composition (2) of the present invention may further contain an amorphous styrene resin (B). The same details as above may be applied to the amorphous styrene resin (B).

In the case where the flame retardant polycarbonate resin composition (2) of the present invention contains the amorphous styrene resin (B), the content thereof is preferably from 5 to 30 parts by mass, more preferably from 7 to 25 parts by mass, and further preferably from 10 to 20 parts by mass, per 100 parts by mass of the polycarbonate resin mixture (A'). When the content is in the range, the molding processability of the resin composition of the present invention can be enhanced while preventing the other properties including the heat resistance, the flame retardancy and the impact resistance from being impaired largely.

The flame retardant polycarbonate resin composition (2) of the present invention may further contain an inorganic filler (D) for enhancing the rigidity and the flame retardancy of the molded article. The same details as above may be applied to the inorganic filler (D). In the case where the flame retardant polycarbonate resin composition (2) of the present invention contains the inorganic filler (D), the content thereof is preferably from 1 to 40 parts by mass, more preferably from 1 to 30 parts by mass, and further preferably from 5 to 15 parts by mass, per 100 parts by mass of the polycarbonate resin mixture (A'), from the standpoint of the balance among the specific gravity, the impact resistance and the like of the molded article.

The flame retardant polycarbonate resin composition (2) of the present invention may further contain an impact resistance improving agent (E). The same details as above may be applied to the impact resistance improving agent (E). In the case where the flame retardant polycarbonate resin composition (2) of the present invention contains the impact resistance improving agent (E), the content thereof may be determined in total consideration of the impact resistance, the heat resistance, the rigidity and the like that are required for the target molded article, and is preferably from 1 to 15 parts by mass, more preferably from 1 to 10 parts by mass, and further preferably from 1 to 7 parts by mass, per 100 parts by mass of the polycarbonate resin mixture (A'). When the content is in the range, the impact resistance may be enhanced while preventing the flame retardancy from being lowered.

The flame retardant polycarbonate resin composition (2) of the present invention may further contain an ordinary additive, such as an antioxidant, an ultraviolet ray absorbent, a releasing agent and a colorant.

The flame retardant polycarbonate resin composition (2) of the present invention preferably substantially does not contain both an organohalogen flame retardant and an organic phosphate ester flame retardant. In this case, corrosion of a mold, formation of harmful gas, and the like are difficult to occur upon molding the resin composition, and furthermore, the resin composition is excellent in hygrothermal resistance, whereby the recycling rate after use may be advantageously increased.

The production method of the flame retardant polycarbonate resin composition (2) of the present invention will be described.

The flame retardant polycarbonate resin composition (2) of the present invention may be obtained by mixing and kneading the component (A') (including the components (A-1) and (A-2) and the component (A-3) used depending on necessity) and the component (F) at the aforementioned ratios and other optional components including the components (B), (D) and (E) and the other additives at appropriate ratios.

The mixing and kneading operation herein may be performed by using an ordinary equipment. For example, the components may be preliminarily mixed with a ribbon blender, a drum blender or the like, and then a Henschel mixer, a Banbury mixer, a single screw extruder, a double screw extruder, a multiple screw extruder, a co-kneader or the like is used.

The heating temperature upon kneading may be generally appropriately selected from a range of from 240 to 300°C.

The components other than the polycarbonate resin mixture (A') may be added in the form of a master batch formed by melt kneading with the polycarbonate resin mixture (A') in advance.

The flame retardant polycarbonate resin composition (2) of the present invention may be preferably applied to

production of an injection molded article, in which the resin composition is formed into a composition molding raw material in the form of pellets by the aforementioned melt kneading method, and the pellets are subjected to injection molding or injection compression molding. As the injection molding method, gas injection molding may be employed for preventing surface dents or for reducing the weight.

The present invention also provides an injection molded article containing the flame retardant polycarbonate resin composition (2) of the present invention. The injection molded article of the present invention thus obtained above is excellent in the flame retardancy, the mechanical strength and the moisture resistance even though the molded article is formed by using the recovered polycarbonate resin as a raw material and substantially does not contain both an organohalogen flame retardant and an organic phosphate ester flame retardant.

Example

The present invention will be described specifically with reference to examples below, but the present invention is not limited to the examples.
The measurement of the content of a metal foreign matter in the recovered polycarbonate resins obtained in Example 1 and Comparative Examples 1 to 3 and the evaluation of the residence heat stability of the recovered polycarbonate resins were evaluated in the following manners.

Measurement of Content of Metal Foreign Matter

10 g of a specimen of the recovered polycarbonate resin obtained in each of the examples was weighed in a platinum crucible, and after carbonizing in an electric furnace, the temperature was increased to 800°C for completely ashing.
Thereafter, the residue was dissolved in hydrochloric acid, and the residual amount of metals (including Na, Fe, Al, Te, Sb and Cu) was measured by ICP (inductively coupled plasma) analysis (measuring device: "IRIS Advantage" produced by Jarell Ash Corporation).
A recovered polycarbonate resin that had contents of Na and Fe of all 0.2 ppm by mass or less and contents of Al, Te, Sb and Cu of all 0.1 ppm by mass or less was designated as a good product, and a recovered polycarbonate resin that did not have the above contents was designated as a defective product.

Evaluation of Residence Heat Stability (Measurement of YI)

The recovered PC-1 to PC-4 (good products and defective products) were evaluated for the residence heat stability in the molding machine.

Molding machine: "EC40N" (produced by Toshiba Machine Co., Ltd.)
Cylinder temperature: 320°C
Mold temperature: 80°C
Residence time: 0, 5, 10, 15 and 20 min

After molded articles were stably provided, molded plates (80 x 40 x 3 mm) residing for the aforementioned residing time after the sixth shot were measured for hue for evaluating YI (yellowness index) with "SZ-∑90", produced by Nippon Denshoku Industries Co., Ltd., according to JIS K7105, and the change amount thereof was designated as an index for evaluation of the residence heat stability. A smaller change amount of YI means excellent residence heat stability.
For reference, MD1500 (polycarbonate resin for optical disk, produced by Formosa Idemitsu Petrochemical Corporation) was evaluated for residence heat stability.

Production Example 1

Production of Recovered Polycarbonate 1 (Recovered PC-1) Crushing Step

An optical disk containing a polycarbonate substrate having aluminum vapor-deposited thereon as a foreign layer, which deviated the product standard and was recovered from an optical disk production equipment, was crushed with a rotary crushing machine with a screen pore diameter set to 16 mm. The crushed product had an average particle diameter of 12 mm.

Impurity Removing Step by Chemical Treatment

(i) Rinsing with Aqueous Solution of Surfactant

The crushed product was then agitated in a mixed aqueous solution containing 1% by mass of polyoxyethylene disulfonated phenyl ether (Emulgen (a trade name) A-500, produced by Kao Corporation) and 1% by mass of sodium alkylbenzenesulfonate as surfactants, at 90°C for 60 minutes.

(ii) Alkali Treatment

Subsequently, the thus-treated product was agitated in a 3% by mass sodium hydroxide aqueous solution at 120°C for 30 minutes, and then agitated in a 5% by mass sodium hydroxide aqueous solution at 120°C for 30 minutes.

(iii) Rinsing with Mixed Aqueous Solution of Surfactant and Peroxide

Subsequently, the thus-treated product was agitated in a mixed aqueous solution formed by mixing a mixed aqueous solution containing 1% by mass of polyoxyethylene disulfonated phenyl ether (Emulgen (a trade name) A-500, produced by Kao Corporation) and 1% by mass of sodium alkylbenzenesulfonate with hydrogen peroxide in an amount corresponding to 0.58% by mass, at 90°C for 30 minutes.

(iv) Rinsing with Water and Drying

The thus-treated product was sufficiently rinsed with water and then dried at 80°C for 5 hours.

Process Step (I), Step (a)

As shown in Fig. 2, the dried chemically treated product was conveyed to the shooter, and two pieces of magnet having a magnetic flux density of 12,000 G and a length larger than the width size of the shooter were disposed with a distance of 15 cm therebetween at positions remote from the shooter by 0.5 cm, thereby removing the chemically treated product that contained a magnetic metal foreign matter by attaching to the magnet.

Process Step (I), Step (b)

The chemically treated product having been subjected to the step (a) was then conveyed with a belt conveyer at 100 m/min, and a colored foreign matter in the chemically treated product was detected by using a three-CCD camera color identifier having a mechanism shown in Fig. 3, and removed by blowing away at a wind pressure of 0.4 MPa with an ejector.

Process Step (II)

A metal foreign matter detector, "Super Mepoly III" (produced by Anritsu Corporation), shown in Fig. 4 was used. The polycarbonate resin obtained in the process step (I) was

placed on and conveyed with a conveying belt moving at a conveying speed of 60 m/min in an amount making 0.15 kg/m, and a product bag containing the polycarbonate resin having a metal foreign matter detected was discarded, thereby providing a recovered polycarbonate resin (hereinafter referred to as a recovered PC-1) with high purity.
10 specimens of the recovered PC-1 were prepared and were measured for the content of a metal foreign matter and the viscosity average molecular weight. The results are shown in Table 1. The measurement results of YI are shown in Table 2.

Production Example 2

Production of Recovered Polycarbonate 2 (Recovered PC-2)

A recovered polycarbonate resin (hereinafter referred to as a recovered PC-2) was obtained in the same manner as in Production Example 1 except that both the process steps (I) and (II) were not performed. 10 specimens of the recovered PC-2 were prepared and were measured for the content of a metal foreign matter and the viscosity average molecular weight. The results are shown in Table 1. The measurement results of YI are shown in Table 2.

Production Example 3

Production of Recovered Polycarbonate 3 (Recovered PC-3)

A recovered polycarbonate resin (hereinafter referred to as a recovered PC-3) was obtained in the same manner as in Production Example 1 except that the process step (I) was not performed. 10 specimens of the recovered PC-3 were prepared and were measured for the content of a metal foreign matter and the viscosity average molecular weight. The results are shown in Table 1. The measurement results of YI are shown in Table 2.

Production Example 4

Production of Recovered Polycarbonate 4 (Recovered PC-4)

A recovered polycarbonate resin (hereinafter referred to as a recovered PC-4) was obtained in the same manner as in Production Example 1 except that the process step (II) was not performed. 10 specimens of the recovered PC-4 were prepared and were measured for the content of a metal foreign matter and the viscosity average molecular weight. The results are shown in Table 1. The measurement results of YI are shown in Table 2.
Table 1

| | | Example | Comparative Example | | | | | |
|---|---|---|---|---|---|---|---|---|
| | | 1 | 1 | | 2 | | 3 | |
| Crushing step + Chemical treatment | | done | done | | done | | done | |
| Process step (I) | | done | no | | no | | done | |
| Process step (II) | | done | no | | done | | no | |
| | | recovered PC-1 | recovered PC-2 | | recovered PC-3 | | recovered PC-4 | |
| | | good product | good product | defective product | good product | defective product | good product | defective product |
| Analysis result | Na (ppm) | 0.2 | 0.2 | 3.0 | 0.2 | 2.0 | 0.2 | 1.7 |
| | Fe (ppm) | 0.2 | 0.2 | 2.0 | 0.2 | 3.0 | 0.2 | 2.0 |
| | Al (ppm) | < 0.1 | < 0.1 | 0.3 | < 0.1 | 0.3 | < 0.1 | 0.2 |
| | Te (ppm) | < 0.1 | < 0.1 | 0.4 | < 0.1 | 0.3 | < 0.1 | 0.3 |
| | Sb (ppm) | < 0.1 | < 0.1 | 0.3 | < 0.1 | 0.3 | <0.1 | 0.3 |
| | Cu (ppm) | < 0.1 | < 0.1 | 0.3 | < 0.1 | 0.3 | < 0.1 | 0.2 |
| Number of specimens | | 10 | 7 | 3 | 8 | 2 | 8 | 2 |

Table 2

| | | | Example | Comparative Example | | | | | |
|---|---|---|---|---|---|---|---|---|---|
| | | | 1 | 1 | | 2 | | 3 | |
| | | MD1500 | recovered PC-1 | recovered PC-2 | | recovered PC-3 | | recovered PC-4 | |
| | | good product | good product | good product | defective product | good product | defective product | good product | defective product |
| Temperature | Residence time | YI | YI | YI | YI | YI | YI | YI | YI |
| 320°C | 0 min | 1.79 | 1.87 | 1.84 | 3.62 | 1.86 | 3.30 | 1.89 | 3.36 |
| | 5 min | 1.99 | 2.03 | 2.04 | 4.40 | 2.03 | 4.34 | 2.03 | 4.33 |
| | 10 min | 2.26 | 2.45 | 2.50 | 5.99 | 2.53 | 5.96 | 2.48 | 5.76 |
| | 15 min | 2.68 | 2.75 | 2.78 | 7.29 | 2.80 | 7.10 | 2.79 | 7.00 |
| | 20 min | 2.93 | 3.01 | 3.04 | 7.54 | 3.10 | 7.55 | 3.09 | 7.34 |

It is understood from Tables 1 and 2 that the polycarbonate resin recovered according to the method described for the present invention in Example 1 always has contents of sodium and iron or 0.2 ppm by mass and contents of aluminum, tellurium, antimony and copper of less than 0.1 ppm by mass, and thus considerably high quality, and is difficult to be yellowed on residence in the molding machine, and thus is excellent in residence heat stability.
In the recovered polycarbonate resins obtained in Comparative Examples 1 to 3, on the other hand, it is understood that 4/1 of the specimens have contents of sodium and iron of 1.7 ppm by mass or more and each of contents of aluminum, tellurium, antimony and copper of 0.2 ppm by mass or more, and thus contain a recovered polycarbonate resin with low purity mixed therein, and the polycarbonate resins are poor in residence heat stability.
CD-ROMs produced in Test Example below were measured for durability in the following manner.

Durability

Measurement of Electric Characteristics

$I_{11}R_{min}$ (= $I_{11}/I_{Top}$ minimum value of reflective), which is a signal intensity ratio of the mirror portion without pit and the $I_{11}$ pit, was measured for evaluating the electric characteristics. The standard value for CD-ROM is $I_{11}R_{min}$ of 0.6 or more.

Measurement of BLER

5 pieces of CD-ROMs that were randomly selected were measured for the average value and the maximum value of BLER (block error rate). The standard value for CD-ROM is BLER of 220 or less.

Evaluation of Durability

CD-ROMs maintained under an environment of 80°C and a humidity of 85% for 168 hours were measured for the electric characteristics and BLER. Smaller change amounts of the electric characteristics and BLER mean excellent durability.
CD-ROM that satisfies the CD-ROM standard values of the electric characteristics and BLER and satisfies the evaluation of durability is designated as a passed product, and CD-ROM that does not satisfy at least one of them is designated as a failed product.

Test Example

50% by mass of the recovered PC-1 to PC-4 (good products and defective products) obtained in Example 1 and Comparative Examples 1 to 3 and 50% by mass of MD1500 (polycarbonate resin for optical disk, produced by Formosa Idemitsu Petrochemical Corporation) were uniformly mixed and formed into pellets, thereby providing recovered PC-1' to PC-4', respectively.
CD-ROMs were molded with the recovered PC-1' to PC-4' by using a molding machine "SD40ER" (produced by Sumitomo Heavy Industries, Ltd., conditions: cylinder temperature: 350°C, injection pressure: 167 MPa, injection time: 2.5 sec, cooling time: 2.2 sec), thereby providing CD-ROM-1 to CD-ROM-4, respectively.
An Al film and an UV protective film were coated on the CD-ROM-1 to CD-ROM-4, which were subjected to measurement of the electric characteristics and BLER (block error rate) and evaluation of the durability.
For reference, an Al film and an UV protective film were coated on a CD-ROM obtained by molding only MD1500 (referred to as CD-ROM-0), which was subjected to the same measurement evaluation.
Table 3

| | | | CD-ROM-0 | CD-ROM-1 | CD-ROM-2 | | CD-ROM-3 | | CD-ROM-4 | |
|---|---|---|---|---|---|---|---|---|---|---|
| | | | MD1500 | recovered PC-1' | recovered PC-2' | | recovered PC-3' | | recovered PC-4' | |
| | | | passed product | Passed product | passed product | failed product | passed product | failed product | passed product | failed product |
| | $I_{11}R_{min}$ | | 0.69 | 0.69 | 0.67 | 0.62 | 0.68 | 0.65 | 0.68 | 0.66 |
| | BLER average value | | 2 | 6 | 7 | 8 | 7 | 8 | 7 | 8 |
| | BLER maximum value | | 5 | 18 | 22 | 27 | 20 | 24 | 20 | 24 |
| Measurement results of durability | after maintaining at 80°C and humidity of 85% | $I_{11}R_{min}$ | 0.63 | 0.61 | 0.61 | 0.36 | 0.62 | 0.45 | 0.62 | 0.47 |
| | | BLER average value | 8 | 15 | 16 | 41 | 14 | 41 | 15 | 41 |
| | | BLER maximum value | 15 | 29 | 33 | 280 | 37 | 255 | 37 | 266 |

It is understood from Table 3 that the CD-ROM produced with the polycarbonate resin recovered according to the method of the present invention always has high durability. It is also understood that the CD-ROMs produced with the recovered polycarbonate resins obtained in Comparative Examples 1 to 3 include ones having poor durability and are poor in industrial usefulness.

The measurements of properties in Examples 2 to 13, Comparative Examples 4 to 9 and Reference Example 1 were performed in the following manner.

(1) UL Combustion Test

Measured according to UL94 (thickness: 1.5 mm).

(2) Izod Impact Strength (with notch)

The impact strength was measured according to ASTM D256 at 23°C (thickness: 3.2 mm) (unit: $kJ/m^2$).

(3) Flowability Test (MFR)

The pellets obtained in Examples and Comparative Examples were measured for flowability ($MFR_0$) at 260°C and a load of 2.16 kg.

(4) Foreign Matter Evaluation (0.2 $mm^2$ or more)

The pellets obtained in Examples and Comparative Examples were molded into a flat plate of 6 x 6 x 0.2 cm with an injection molding machine (ROBOSHT α-100C, produced by Fanuc Corporation, molding temperature: 250°C) . The number of foreign matters on the surface having no ejection pin was counted and evaluated as a total number of 7 plates (250 $cm^2$).

(5) Moisture Resistance Test

The pellets obtained in Examples and Comparative Examples were maintained in a thermostat chamber at 65°C and a relative humidity of 85% for 500 hours, and then measured for flowability ($MFR_{500}$) at 260°C and a load of 2.16 kg, and the humidity resistance was calculated from the relationship to $MFR_0$ of the flowability test according to the following expression.

$$\text{humidity resistance (\%)} = MFR_{500}/MFR_0$$

(6) Measurement of Viscosity Average Molecular Weight (Mv) of Polycarbonate

A methylene chloride solution was measured for viscosity at 20°C with an Ubbelohde viscometer, from which the limiting viscosity [η] was obtained, and the viscosity average molecular weight was calculated according to the following expression.

$$[\eta] = 1.23 \times 10^{-5} Mv^{0.83}$$

Examples 2 to 13, Comparative Examples 4 to 9 and Reference Example 1

As the recovered polycarbonate resin (A-1), the recovered PC-1 obtained in Example 1 was used in Examples 2 to 13, the recovered PC-2 (defective product), and the recovered PC-3 (defective product) and the recovered PC-4 (defective product) obtained in Comparative Examples 1 to 3 were used in Comparative Examples 4 to 9, to which the polycarbonate other than the recovered polycarbonate (A-1) (i.e., the virgin polycarbonate, referred to as a component (A-2)) and other components (except for the component (C)) were mixed in amounts shown in Table 4 or 5. The mixture was fed to a vent type twin screw extruder (model name: TEM35, produced by Toshiba Machine Co., Ltd.) and melt kneaded at 280°C, to which the component (C) heated to approximately 80°C was added through the barrel on the flow path, thereby forming into pellets.
The resulting pellets were dried at 80°C for 5 hours, and then injection molded at a molding temperature of 240°C (mold

temperature: 40°C), thereby producing a test piece for evaluation, which was subjected to the measurement of Izod impact strength and the UL combustion test. The pellets were subjected to the humidity resistance test and the foreign matter evaluation mentioned above. The results of the measurement of properties are shown in Tables 4 and 5.
In Tables 4 and 5, the components (C) to (F) are mixed amounts (part by mass) per 100 parts by mass in total of the components (A) and (B).

(A-2) Virgin Polycarbonate
PC-1: FN2200A (produced by Idemitsu Kosan Co., Ltd., bisphenol A polycarbonate, viscosity average molecular weight: 22,000)
PC-2: FN2600A (produced by Idemitsu Kosan Co., Ltd., bisphenol A polycarbonate, viscosity average molecular weight: 26,000)
(B) Amorphous Styrene Resin
Acrylonitrile-butadiene-styrene copolymer: AT-05 (produced by Nippon A&L, Inc., MFR: 18 g/10 min (at 220°C, load of 5 kg) Acrylonitrile-styrene copolymer: 290FF (produced by Techno Polymer Co., Ltd., MFR: 48.4 g/10 min (at 220°C, load of 5 kg) (C) Non-Halogen-containing Phosphate Ester Compound Bisphenol A bis(diphenyl phosphate): CR-741 (produced by Daihachi Chemical Industry Co., Ltd.)
(D) Inorganic Filler
Talc: TP-A25 (produced by Fuji Talc Industrial Co., Ltd., average particle diameter: 5 μm)
(E) Impact Resistance Improving Agent
Core-shell type graft rubber elastomer: EXL2603 (produced by Rohm & Haas Japan Co., Ltd., core: butadiene, shell: methyl methacrylate (MMA))
(F) Polyfluoroolefin Resin
PTFE, produced by Asahi Glass Co., Ltd., CD076, average molecular weight: ca. 2,000,000 to 3,000,000)

Other Additives

Antioxidant: tris(2,4-di-tert-butylphenyl) phosphite (Irgafos 168, produced by Ciba Speciality Chemicals Co., Ltd.) Releasing agent: pentaerythritol tetrastearate (Rikester EW-440A, produced by Riken Vitamin Co., Ltd.)

Table 4

| | | | Example | | | | | | | | | | | |
|---|---|---|---|---|---|---|---|---|---|---|---|---|---|---|
| | | | 2 | 3 | 4 | 5 | 6 | 7 | 8 | 9 | 10 | 11 | 12 | 13 |
| (A) | Recycled PC (A-1) | Recovered PC-1 | 11 | 23 | 34 | 36 | 36 | 36 | 36 | 36 | 50 | 60 | 36 | 36 |
| | Virgin PC (A-2) | PC-1 | 61 | 37 | 15 | 16 | 11 | 11 | 11 | 18 | 10 | 10 | 11 | 11 |
| | | PC-2 | 11 | 23 | 34 | 36 | 36 | 36 | 36 | 36 | | | 36 | 36 |
| (B) | Amorphous styrene resin | AT-05 | 17 | 17 | 17 | | 17 | 17 | 17 | 10 | 40 | 30 | 17 | 17 |
| | | 290FF | | | | 12 | | | | | | | | |
| (C) | Phosphorus flame retardant | CR-741 | 13.6 | 13.6 | 13.6 | 15.5 | 15.5 | 7 | 10 | 15.5 | 13.6 | 13.6 | 15.5 | 15.5 |
| (D) | Inorganic filler | TP-A25 | | | | | 3.6 | 3.6 | 3.6 | 3.6 | | | 10 | 3.6 |
| (E) | Impact resistance improving agent | EXL2603 | | | | 4.8 | 1.2 | 1.2 | 1.2 | 1.2 | | | 1.2 | 10 |
| (F) | Polyfluoroolefin resin (PTFE) | | 0.5 | 0.5 | 0.5 | 0.5 | 0.5 | 0.5 | 0.5 | 0.5 | 0.5 | 0.5 | 0.5 | 0.5 |
| | Antioxidant | Irgafos 168 | 0.1 | 0.1 | 0.1 | 0.1 | 0.1 | 0.1 | 0.1 | 0.1 | 0.1 | 0.1 | 0.1 | 0.1 |
| | Releasing agent | RikesterEW-440A | 1.0 | 1.0 | 1.0 | 1.0 | 1.0 | 1.0 | 1.0 | 1.0 | 1.0 | 1.0 | 1.0 | 1.0 |

(continued)

| | | | Example | | | | | | | | | | | |
|---|---|---|---|---|---|---|---|---|---|---|---|---|---|---|
| | | | 2 | 3 | 4 | 5 | 6 | 7 | 8 | 9 | 10 | 11 | 12 | 13 |
| Properties | Flame retardancy (UL-94) | 1.5 mm | V-0 | V-0 | V-0 | V-0 | V-0 | V-0 | V-0 | V-0 | V-1 | V-1 | V-0 | V-1 |
| | Flowability ($MFR_0$) | g/10 min | 15 | 16 | 16 | 20 | 15 | 10 | 13 | 12 | 30 | 25 | 11 | 12 |
| | Izod impact strength | kJ/m$^2$ | 50 | 48 | 46 | 40 | 45 | 50 | 40 | 30 | 30 | 30 | 20 | 65 |
| | Foreign matter (0.2 mm$^2$ or more) | | 0 | 0 | 0 | 0 | 0 | 0 | 0 | 0 | 0 | 0 | 0 | 0 |
| | Humidity resistance test $MFR_{500}$ (65°C. 85%RH, 500 hr) | | 16 | 16 | 17 | 21 | 16 | 11 | 14 | 14 | 32 | 27 | 12 | 13 |
| | $MFR_{500}/MFR_0$ | | 1.07 | 1.00 | 1.06 | 1.05 | 1.07 | 1.1 | 1.08 | 1.17 | 1.07 | 1.08 | 1.09 | 1.08 |

Table 5

| | | | Comparative Example | | | | | | Reference Example |
|---|---|---|---|---|---|---|---|---|---|
| | | | 4 | 5 | 6 | 7 | 8 | 9 | 1 |
| (A) | Recycled PC (comparative) | Recovered PC-2 (defective) | 34 | | | 36 | 50 | | |
| | | Recovered PC-3 (defective) | | 34 | | | | 60 | |
| | | Recovered PC-4 (defective) | | | 34 | | | | |
| | Virgin PC (A-2) | PC-1 | 15 | 15 | 15 | 16 | 10 | 10 | 83 |
| | | PC-2 | 34 | 34 | 34 | 36 | | | |
| (B) | Amorphous styrene resin | AT-05 | 17 | 17 | 17 | | 40 | 30 | 17 |
| | | 290FF | | | | 12 | | | |
| (C) | Phosphorus flame retardant | CR-741 | 13.6 | 13.6 | 13.6 | 15.5 | 13.6 | 13.6 | 13.6 |
| (D) | Inorganic filler | TP-A25 | | | | | | | |
| (E) | Impact resistance improving agent | EXL2603 | | | | 4.8 | | | |
| (F) | Polyfluoroolefin resin | DTFE) | 0.5 | 0.5 | 0.5 | 0.5 | 0.5 | 0.5 | 0.5 |
| | Antioxidant | Irgafos 168 | 0.1 | 0.1 | 0.1 | 0.1 | 0.1 | 0.1 | 0.1 |
| | Releasing agent | Rikester EW-440A | 1.0 | 1.0 | 1.0 | 1.0 | 1.0 | 1.0 | 1.0 |
| Properties | Flame retardancy (UL-94) | 1.5 mm | V-1 | V-1 | V-1 | V-1 | V-1 | V-1 | V-0 |
| | Flowability ($MFR_0$) | g/10 min | 16 | 16 | 17 | 21 | 30 | 25 | 15 |
| | Izod impact strength | $kJ/m^2$ | 30 | 35 | 35 | 25 | 20 | 15 | 50 |
| | Foreign matter (0.2 $mm^2$ or more) | | 5 | 4 | 3 | 5 | 4 | 4 | 0 |
| | Humidity resistance test (65°C, 85%RH, 500 hr) | $MFR_{500}$ | 23 | 21 | 22 | 28 | 39 | 33 | 15 |
| | | $MFR_{500}/MFR_0$ | 1.44 | 1.32 | 1.59 | 1.33 | 1.30 | 1.32 | 1.00 |

It is understood from Tables 4 and 5 that in Examples 2 to 4, the recovered polycarbonate is used partially in the virgin polycarbonate of Reference Example 1, but the flame retardancy, the flowability and the Izod impact strength are substantially not changed. It is also understood that the flame retardant polycarbonate resin compositions of all Examples are excellent in flame retardancy, have no foreign matter of 0.2 $mm^2$ or more, and suffer considerably small change in flowability in the moisture resistance test.

The measurements of property tests for the following items (1) to (5) in Examples 14 to 25, Comparative Examples 10 to 16 and Reference Example 2 were performed in the following manner.

(1) Flame Retardancy Test (UL Combustion Test)
(2) Flowability Test of Pellets (MFR)
(3) Impact Resistance Test (Izod Impact Strength) (with notch)
(4) Foreign Matter Evaluation
(5) Moisture Resistance Test

All the property tests were performed in the same manner as in Examples 2 to 13, Comparative Examples 4 to 9 and Reference Example 1.

Examples 14 to 25, Comparative Examples 10 to 16 and Reference Example 2

The components were mixed according to Table 6 or 7. The mixture was fed to a vent type twin screw extruder (model name: TEM35, produced by Toshiba Machine Co., Ltd.) and melt kneaded at 280°C, thereby forming into pellets. The resulting pellets were dried at 120°C for 5 hours, and then injection molded at a molding temperature of 260°C (mold temperature: 80°C), thereby producing a test piece for evaluation and a molded specimen, which were subjected to the property tests according to the aforementioned test methods. The results are shown in Tables 6 and 7.
In Tables 6 and 7, the components (B) and (D) to (F) are mixed amounts (part by mass) per 100 parts by mass in total of the component (A'), i.e., the components (A-1) to (A-3).

(A-1) Recovered Polycarbonate Resin

The recovered PC-1 obtained in Example 1, and the recovered PC-2 (defective product), PC-3 (defective product) and PC-4 (defective product) obtained in Comparative Examples 1 to 3 were used.

(A-2) Polycarbonate-Polyorganosiloxane Copolymer

The following virgin polycarbonate-polyorganosiloxane copolymers were used.
PC-PDMS-1: polycarbonate-polyorganosiloxane copolymer: CF1700 (produced by Idemitsu Kosan Co., Ltd., viscosity average molecular weight: 17,800, polymerization degree of polydimethylsiloxane (PDMS) part: 40, PDMS content: 3.5% by mass)
PC-PDMS-2: polycarbonate-polyorganosiloxane copolymer obtained in Production Example 5 described later (viscosity average molecular weight: 17,300, polymerization degree of polydimethylsiloxane (PDMS) part: 90, PDMS content: 6.6% by mass)

(A-3) Virgin Aromatic Polycarbonate Resin

PC-1: bisphenol A polycarbonate, FN1700A (produced by Idemitsu Kosan Co., Ltd., viscosity average molecular weight: 17,000) PC-2: bisphenol A polycarbonate, FN2600A (produced by Idemitsu Kosan Co., Ltd., viscosity average molecular weight: 26,000)

(F) Polyfluoroolefin Resin

PTFE (polytetrafluoroethylene resin), CD076 (produced by Asahi Glass Co., Ltd.)

(B) Amorphous Styrene Resin

Acrylonitrile-butadiene-styrene copolymer: AT-05 (produced by Nippon A&L, Inc., MFR: 18 g/10 min (at 220°C, load of 5 kg) Acrylonitrile-styrene copolymer: 290FF (produced by Techno Polymer Co., Ltd., MFR: 48.4 g/10 min (at 220°C, load of 5 kg)

(D) Inorganic Filler

Talc: TP-A25 (produced by Fuji Talc Industrial Co., Ltd., average particle diameter: 5 μm)

(E) Impact Resistance Improving Agent

Core-shell type graft rubber elastomer: EXL2603 (produced by Rohm & Haas Japan Co., Ltd., core: butadiene, shell: methyl methacrylate (MMA))

Other Additives

Antioxidant: tris(2,4-di-tert-butylphenyl) phosphite (Irgafos 168, produced by BASF)
Releasing agent: pentaerythritol tetrastearate (Rikester EW-440A, produced by Riken Vitamin Co., Ltd.)

Production Example 5

Production of Polycarbonate-Polydimethylsiloxane Copolymer Synthesis of Polycarbonate Oligomer

To a 5.6% by mass sodium hydroxide aqueous solution, sodium dithionate was added in an amount of 2,000 ppm with respect to bisphenol A (BPA) dissolved in the later stage, to which bisphenol A was then added to make a bisphenol A concentration of 13.5% by mass, thereby preparing a sodium hydroxide aqueous solution of bisphenol A.
The sodium hydroxide aqueous solution of bisphenol A at a flow rate of 40 L/hr, methylene chloride at a flow rate of 15 L/hr and phosgene at a flow rate of 4.0 kg/hr were continuously fed to a tubular reactor having an inner diameter of 6 mm and a length of 30 m. The tubular reactor had a jacket, and cooling water was fed to the jacket to maintain the temperature of the reaction liquid to 40°C or less.
The reaction liquid discharged from the tubular reactor was continuously introduced to a tank reactor with a baffle having an internal capacity of 40 L equipped with a sweptback blade, to which the sodium hydroxide aqueous solution of bisphenol A at 2.8 L/hr, a 25% by mass sodium hydroxide aqueous solution at 0. 07 L/hr, water at 17 L/hr and a 1% by mass triethylamine aqueous solution at 0.64 L/hr were added to perform reaction. The reaction liquid overflowing from the tank reactor was continuously withdrawn and allowed to stand for removing the aqueous phase, and the methylene chloride phase was collected.
The polycarbonate oligomer thus obtained had a concentration of 318 g/L and a chloroformate group concentration of 0.75 mol/L.

Production of Polycarbonate-Polydimethylsiloxane Copolymer

To a 50-L tank reactor equipped with a baffle plate, a paddle agitation blade and a cooling jacket, 15 L of the polycarbonate oligomer solution produced above, 9.0 L of methylene chloride, 396 g of o-allylphenol-terminal modified polydimethylsiloxane (PDMS) having a repeating number of the dimethylsiloxane unit of 90 and 8.8 mL of triethylamine were charged, to which 1,389 g of a 6.4% by mass sodium hydroxide aqueous solution was added under stirring, and the polycarbonate oligomer and the o-allylphenol-terminal modified PDMS were reacted for 10 minutes.
To the polymerization liquid, a methylene chloride solution of p-t-butylphenol (PTBP) (obtained by dissolving 140 g of PTBP in 2.0 L of methylene chloride) and a sodium hydroxide aqueous solution of bisphenol A (obtained by dissolving 1, 012 g of bisphenol A in an aqueous solution obtained by dissolving 577 g of sodium hydroxide and 2.0 g of sodium dithionate in 8.4 L of water) were added, and the polymerization reaction was performed for 50 minutes.
After adding 10 L of methylene chloride for dilution and stirring for 10 minutes, the reaction liquid was separated into an organic phase containing the polycarbonate-polydimethylsiloxane copolymer and an aqueous phase containing excessive bisphenol A and sodium hydroxide, and the organic phase was isolated.
The methylene chloride solution of the polycarbonate-polydimethylsiloxane copolymer thus obtained was washed with a 0. 03 mol/L sodium hydroxide aqueous solution and 0.2 mol/L hydrochloric acid both in an amount of 15% by volume with respect to the methylene chloride solution, and then washed repeatedly with pure water until the electric conductivity of the aqueous phase after washing reached 0.01 $\mu$S/m or less.
The methylene chloride solution of the polycarbonate-polydimethylsiloxane copolymer thus obtained by washing was concentrated and pulverized, and the resulting flakes were dried under reduced pressure at 120°C.
The resulting polycarbonate-polydimethylsiloxane copolymer had a PDMS residual group amount (PDMS copolymerized amount) of 6.6% by mass as measured by nuclear magnetic resonance (NMR), a viscosity number of 46.7 measured according to ISO 1628-4 (1999), and a viscosity average molecular weight Mv of 17,300.
Table 6

| | | | Example | | | | | | | | | | | |
|---|---|---|---|---|---|---|---|---|---|---|---|---|---|---|
| | | | 14 | 15 | 16 | 17 | 18 | 19 | 20 | 21 | 22 | 23 | 24 | 25 |
| (A') | Recovered polycarbonate resin (A-1) (% bt mass) | Recovered PC-1 | 10 | 35 | 40 | 50 | 70 | 40 | 35 | 12 | 35 | 59 | 37 | 35 |
| | Recovered polycarbonate resin other than (A-1) (% by mass) | Recovered PC-2 (defective) | | | | | | | | | | | | |
| | | Recovered PC-3 (defective) | | | | | | | | | | | | |
| | | Recovered PC-4 (defective) | | | | | | | | | | | | |
| | PC-PDMS copolymer (A-2) (% by mass) | PC-PDMS-1 FC1700 (virgin) | | | | | | | | 23 | 23 | 23 | 24 | 10 |
| | | PC-PDMS-2 Production Example 1 (virgin) | 90 | 23 | 50 | 30 | 30 | 50 | 23 | | | | | |
| | Virgin polycarbonate resin (A-3) (% by mass) | PC-1 | | 30 | | 20 | | | 30 | 59 | 30 | | 27 | 55 |
| | | PC-2 | | 12 | 10 | | | | 12 | 6 | 12 | 18 | 12 | |
| | Polyorganosiloxane content In (A') (% by mass) | | 5.9 | 1.5 | 3.3 | 2 | 2 | 0.7 | 1.5 | 0.8 | 0.8 | 0.8 | 0.8 | 0.4 |
| (F) | Polyfluoroolefin resin (part by mass) | CD076 | 0.3 | 0.3 | 0.3 | 0.3 | 0.3 | 0.5 | 0.3 | 0.3 | 0.3 | 0.3 | 0.3 | 0.5 |
| (B) | Amorphous styrene resin (part by mass) | AT-5 | | | | | | | 12 | 12 | 12 | 12 | | 12 |
| | | 290FF | | | | | | | | | | | 12 | |
| (D) | Inorganic filler (part by mass) | TP-A25 | | | | | | 10 | | 6 | 6 | 6 | 6 | |
| (E) | Impact resistance improving agent (part by mass) | EXL2603 | | | | | | | | | | | 3.6 | |
| | Antioxidant | Irgafos 168 | 0.1 | 0.1 | 0.1 | 0.1 | 0.1 | 0.1 | 0.1 | 0.1 | 0.1 | 0.1 | 0.1 | 0.1 |
| | Releasing agent | Rikester EW-440A | 1.0 | 1.0 | 1.0 | 1.0 | 1.0 | 1.0 | 1.0 | 1.0 | 1.0 | 1.0 | 1.0 | 1.0 |

(continued)

| | | | Example | | | | | | | | | | | |
|---|---|---|---|---|---|---|---|---|---|---|---|---|---|---|
| | | | 14 | 15 | 16 | 17 | 18 | 19 | 20 | 21 | 22 | 23 | 24 | 25 |
| Properties | Flame retardancy (UL-94) | 1.5 mm | V-0 | V-0 | V-0 | V-0 | V-0 | V-0 | V-0 | V-0 | V-0 | V-0 | V-0 | V-0 |
| | MFR (280°C, 21.2 N) | g/10 min | 20 | 26 | 26 | 27 | 30 | 24 | 30 | 25 | 29 | 36 | 34 | 32 |
| | Izod impact strength | $kJ/m^2$ | 75 | 57 | 70 | 35 | 25 | 15 | 70 | 35 | 23 | 15 | 15 | 15 |
| | Number of foreign matter (0.2 $mm^2$ or more) | | 0 | 0 | 0 | 0 | 0 | 0 | 0 | 0 | 0 | 0 | 0 | 0 |
| | Humidity resistance (65°C, 85%RH, 500 hr) MFR (280°C, 21.2 N) | g/10 min | 21 | 27 | 27 | 29 | 32 | 26 | 32 | 26 | 30 | 38 | 35 | 33 |

Table 7

| | | | Comparative Example | | | | | | | Reference Example |
|---|---|---|---|---|---|---|---|---|---|---|
| | | | 10 | 11 | 12 | 13 | 14 | 15 | 16 | 2 |
| (A') | Recovered polycarbonate resin (A-1)(% by mass) | (Recovered PC-1 | | | | | | | 40 | |
| | Recovered polycarbonate resin other than (A-1) (% by mass) | Recovered PC-2 (defective) | 35 | | | 35 | | | | |
| | | Recovered PC-3 (defective) | | 35 | | | 35 | | | |
| | | Recovered PC-4 (defective) | | | 35 | | | 35 | | |
| | PC-PDMS copolymer (A-2) (% by mass) | PC-PDMS-1 FC1700 (virgin) | | | | 23 | 23 | 23 | 3 | 24 |
| | | PC-PDMS-2 Production Example 1 (virgin) | 23 | 23 | 23 | | | | | |
| | Virgin polycarbonate resin (A-3) (% by mass) | PC-1 | 30 | 30 | 30 | 30 | 30 | 30 | 30 | 76 |
| | | PC-2 | 12 | 12 | 12 | 12 | 12 | 12 | 27 | |
| | Polyorganosiloxane content in (A')(% by mass) | | 1.5 | 1.5 | 1.5 | 0.8 | 0.8 | 0.8 | 0.1 | 0.8 |
| (F) | Polyfluoroolefin resin (part by mass) | CD076 | 0.3 | 0.3 | 0.3 | 0.3 | 0.3 | 0.3 | 0.3 | 0.3 |
| (B) | Amorphous styrene resin (part by mass) | AT-5 | | | | 12 | 12 | 12 | 12 | 12 |
| | | 290FF | | | | | | | | |
| (D) | Inorganic filler (part by mass) | TP-A25 | | | | 6 | 6 | 6 | 6 | 6 |
| (E) | Impact resistance improving agent (part by mass) | EXL2603 | | | | | | | | |
| | Antioxidant | Irgatos 1B8 | 0.1 | 0.1 | 0.1 | 0.1 | 0.1 | 0.1 | 0.1 | 0.1 |
| | Releasing agent | Rikester EW-440A | 1.0 | 1.0 | 1.0 | 1.0 | 1.0 | 1.0 | 1.0 | 1.0 |

(continued)

| | | | Comparative Example | | | | | | | Reference Example |
|---|---|---|---|---|---|---|---|---|---|---|
| | | | 10 | 11 | 12 | 13 | 14 | 15 | 16 | 2 |
| Properties | Flame retardancy (UL-94) | 1.5 mm | V1 | V1 | V-1 | V-1 | V-1 | V-1 | V-2 out | V-0 |
| | MFR (280°C, 21.2 N) | g/10 min | 27 | 27 | 28 | 31 | 30 | 30 | 27 | 26 |
| | Izod impact strength | $kJ/m^2$ | 44 | 40 | 40 | 13 | 15 | 15 | 10 | 35 |
| | Number of foreign matter (0.2 $mm^2$ or more) | | 3 | 4 | 5 | 4 | 4 | 3 | 3 | 0 |
| | Humidity resistance (65°C, 85%RH, 500 hr) MFR (280°C, 21.2 N) | g/10 min | 34 | 35 | 34 | 36 | 37 | 37 | 34 | 27 |

It is understood from Tables 6 and 7 that the flame retardant polycarbonate resin compositions of the present invention all have no foreign matter of 0.2 $mm^2$ or more, and suffer considerably small change in flowability in the moisture resistance test. It is also understood that they are excellent in flame retardancy as compared to the polycarbonate resin compositions of Comparative Examples.
It is understood that Examples in Table 6 uses the recovered polycarbonate resin (A-1), and Reference Example 2 in Table 7 uses only the virgin polycarbonate resin, but the polycarbonate resin compositions of the present invention in Examples 14 to 17 and 21 have the flame retardancy and flowability that are substantially not different from those of Reference Example and have the Izod impact strength that is equivalent thereto or higher.

Industrial Applicability

The present invention is useful as a recovering method of a polycarbonate resin from a discarded optical disk and/or a recovered optical disk, and the recovered polycarbonate resin may be molded to use as an optical molded article (particularly an optical disk) . The recovered polycarbonate resin is also useful as a component of various polycarbonate resin compositions, such as a component of a flame retardant polycarbonate resin composition.

Description of Symbols

1(1) normal chemically treated product
1(2) chemically treated product having foreign matter contained
2 magnet
3 shooter
4 belt conveyer
5 color camera
6 illumination for color camera
7 glass
8 belt conveyer
9 air blow/air curtain
10 control unit
11 back panel
12 ejector
13 product dispensing port
14 removed matter dispensing port
15 light emitting and receiving unit (photo sensor)

16 conveying belt
17 conveyer
18 indicator unit
19 detection head

## Claims

1. A method for recovering a polycarbonate resin, comprising steps of: crushing a discarded optical disk and/or a recovered optical disk, which has a polycarbonate resin substrate; chemically treating a resulting crushed product; and subjecting a chemically treated product to the following process steps (I) and (II):

   process step (I): a step containing steps of: (a) removing a magnetic metal foreign matter with a magnet, and (b) identifying a colored foreign matter with an optical camera, and removing the colored foreign matter, and
   process step (II) : a step containing detecting the presence of a metal foreign matter with a metal foreign matter detector, and removing a resin containing the metal foreign matter.

2. The method for recovering a polycarbonate resin according to claim 1, wherein the process step (I) contains the step (a) and then the step (b).

3. The method for recovering a polycarbonate resin according to claim 1 or 2, wherein the chemically treated product is continuously fed to the process step (I), and the process step (I) and the process step (II) are each performed continuously.

4. The method for recovering a polycarbonate resin according to any one of claims 1 to 3, wherein the magnet used in the step (a) has a magnetic flux density of from 10,000 to 12,000 G.

5. The method for recovering a polycarbonate resin according to any one of claims 1 to 4, wherein the optical camera used in the step (b) is a CCD camera, and the step of identifying a colored foreign matter is performed for a treated product on a belt conveyor.

6. The method for recovering a polycarbonate resin according to any one of claims 1 to 5, wherein the crushed product obtained in the crushing step has an average particle diameter of from 3 to 30 mm.

7. A recovered polycarbonate resin obtained by the recovering method according to any one of claims 1 to 6, having a sodium content of 0.5 ppm by mass or less, an iron content of 1 ppm by mass or less, and a content of a metal, which is other than the above mentioned metals and derived from a recording film or a colorant film, of 0.1 ppm by mass or less.

8. An optical polycarbonate resin comprising from 5 to 100% by mass of the recovered polycarbonate resin (A-1) according to claim 7 and from 95 to 0% by mass of a virgin optical polycarbonate resin.

9. An optical molded article comprising the optical polycarbonate resin according to claim 8 having been molded.

10. A flame retardant polycarbonate resin composition comprising 100 parts by mass of a resin component containing from 50 to 95% by mass of a polycarbonate resin (A) containing the recovered polycarbonate resin (A-1) according to claim 7 and from 50 to 5% by mass of an amorphous styrene resin (B), and from 1 to 20 parts by mass of a non-halogen-containing phosphate ester compound (C).

11. The flame retardant polycarbonate resin composition according to claim 10, wherein a content of the recovered polycarbonate resin (A-1) in the polycarbonate resin (A) is from 5 to 95% by mass.

12. The flame retardant polycarbonate resin composition according to claim 10 or 11, wherein the resin composition further comprises from 1 to 40 parts by mass of an inorganic filler (D) per 100 parts by mass of the resin component containing the polycarbonate resin (A) and the amorphous styrene resin (B).

13. The flame retardant polycarbonate resin composition according to any one of claims 10 to 12, wherein the resin composition further comprises from 1 to 15 parts by mass of an impact resistance improving agent (E) per 100 parts

by mass of the resin component containing the polycarbonate resin (A) and the amorphous styrene resin (B).

**14.** An injection molded article comprising the flame retardant polycarbonate resin composition according to any one of claims 10 to 13.

**15.** A flame retardant polycarbonate resin composition comprising 100 parts by mass of a polycarbonate resin mixture (A') containing from 5 to 95% by mass of the recovered polycarbonate resin (A-1) according to claim 7, from 95 to 5% by mass of a polycarbonate-polyorganosiloxane copolymer (A-2) and from 0 to 90% by mass of a virgin aromatic polycarbonate resin (A-3) other than the polycarbonate-polyorganosiloxane copolymer, and from 0.01 to 5 parts by mass of a polyfluoroolefin resin (F).

**16.** The flame retardant polycarbonate resin composition according to claim 15, wherein the polycarbonate resin mixture (A') has a polyorganosiloxane content of from 0.4 to 10% by mass.

**17.** The flame retardant polycarbonate resin composition according to claim 15 or 16, wherein the resin composition further comprises from 5 to 30 parts by mass of an amorphous styrene resin (B) per 100 parts by mass of the polycarbonate resin mixture (A').

**18.** The flame retardant polycarbonate resin composition according to any one of claims 15 to 17, wherein the resin composition further comprises from 1 to 40 parts by mass of an inorganic filler (D) per 100 parts by mass of the polycarbonate resin mixture (A').

**19.** The flame retardant polycarbonate resin composition according to any one of claims 15 to 18, wherein the resin composition further comprises from 1 to 15 parts by mass of an impact resistance improving agent (E) per 100 parts by mass of the polycarbonate resin mixture (A').

**20.** An injection molded article comprising the flame retardant polycarbonate resin composition according to any one of claims 15 to 19 having been molded.

Fig. 1

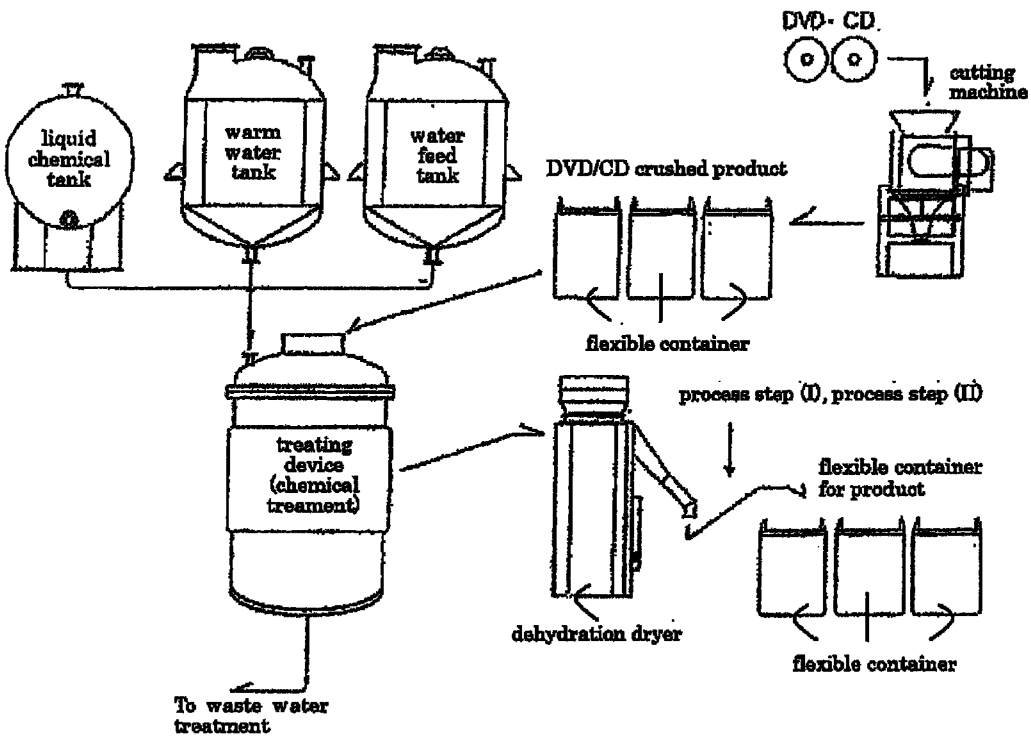


Overall Process Flow Diagram

Fig. 2

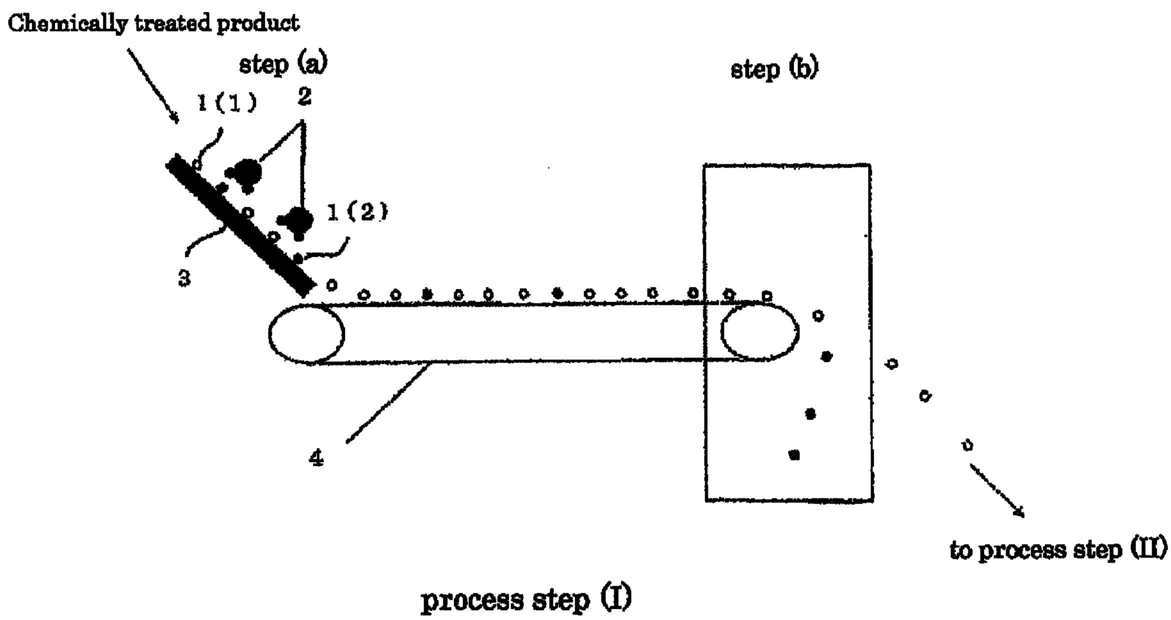
Chemically treated product
step (a)
step (b)
1(1)
2
1(2)
3
4
to process step (II)
process step (I)

Fig. 3

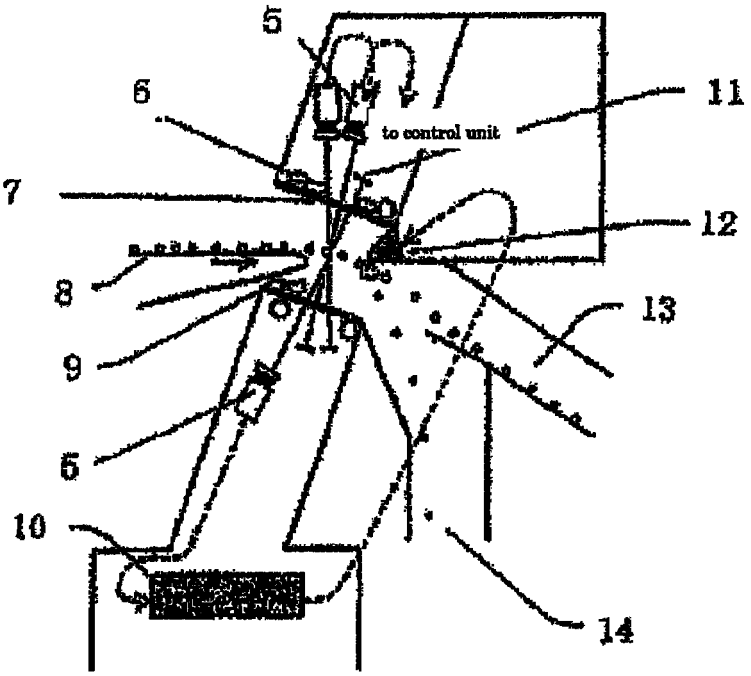


Three-CCD Camera Foreign Matter Identifier

Fig. 4

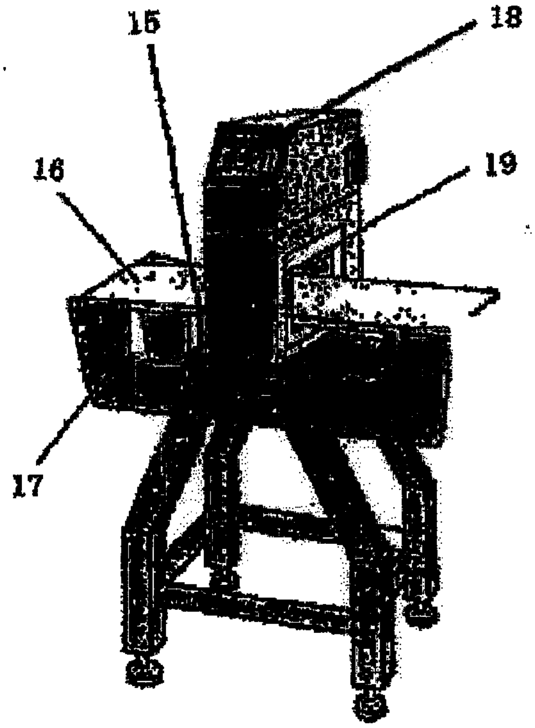


Metal Foreign Matter Detector

Fig. 5

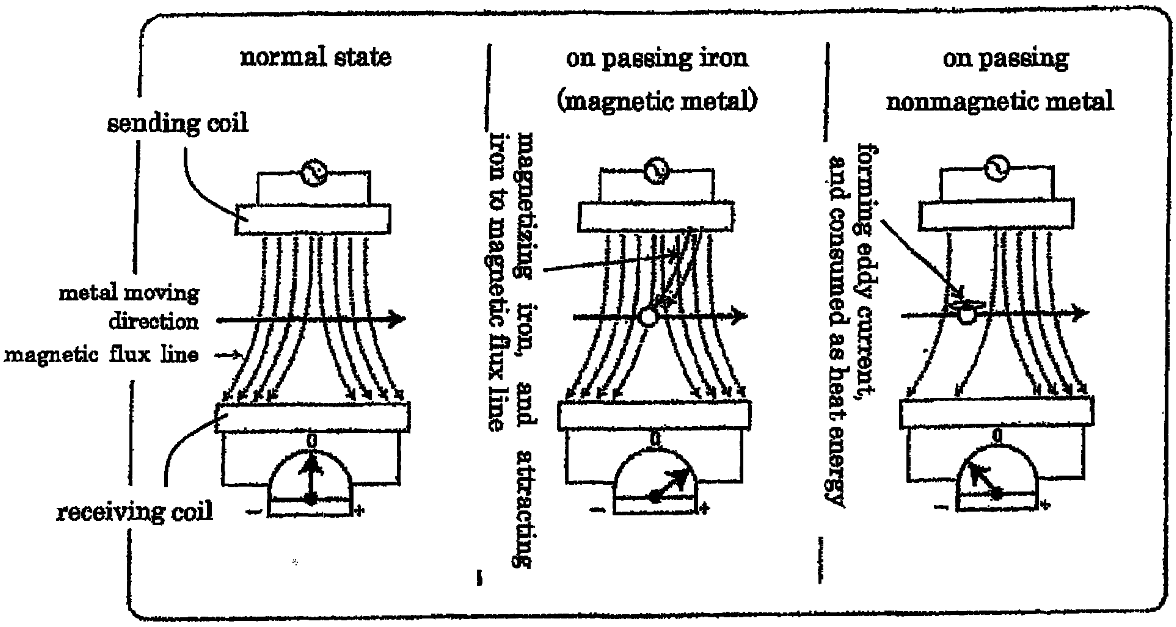


Principle of Detecting Metal Foreign Matter

## INTERNATIONAL SEARCH REPORT

International application No.
PCT/JP2010/073365

A. CLASSIFICATION OF SUBJECT MATTER
*B29B17/02*(2006.01)i, *B03C1/00*(2006.01)i, *B29B17/04*(2006.01)i, *C08J11/00*(2006.01)i, *C08L69/00*(2006.01)i, *G11B7/253*(2006.01)i, *G11B7/26*(2006.01)i

According to International Patent Classification (IPC) or to both national classification and IPC

B. FIELDS SEARCHED

Minimum documentation searched (classification system followed by classification symbols)
B29B17/00-17/04, B09B3/00-5/00, C08J11/00-11/28, G11B7/253, G11B7/26

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)
WPI

C. DOCUMENTS CONSIDERED TO BE RELEVANT

| Category* | Citation of document, with indication, where appropriate, of the relevant passages | Relevant to claim No. |
|---|---|---|
| A | JP 2007-276349 A (Idemitsu Kosan Co., Ltd.), 25 October 2007 (25.10.2007), claims; examples & WO 2007/116877 A1 & CN 101415529 A | 1-6 |
| A | JP 2010-99618 A (Canon Inc.), 06 May 2010 (06.05.2010), claims; paragraph [0001]; examples (Family: none) | 1-6 |
| A | JP 2002-28927 A (Idemitsu Technofine Co., Ltd.), 29 January 2002 (29.01.2002), claims; paragraph [0008] (Family: none) | 1-6 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 24 March, 2011 (24.03.11) | 05 April, 2011 (05.04.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2010/073365

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:

The recovered polycarbonate resin of claim 7 is publicly known through documents (JP 2007-276349 A (Idemitsu Kosan Co., Ltd.), 25 October 2007 (25.10.2007), claims, examples; WO 2007/116877 A1; and CN 101415529 A). There is no special technical feature common to claims 1 and 7. In addition, the technical feature common to claim 7, claim 10 which is dependent only on claim 7 and claim 15 which is dependent only on claim 7 is publicly known through the above-mentioned documents, and thus the common technical feature cannot be considered as a special technical feature.

This international application therefore contains the following four groups of inventions. (Continued to extra sheet)

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☒ No required additional search fees were timely paid by the applicant. Consequently, this international search report is restricted to the invention first mentioned in the claims; it is covered by claims Nos.: 1-6

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

**INTERNATIONAL SEARCH REPORT**

International application No.
PCT/JP2010/073365

Continuation of Box No.III of continuation of first sheet(2)

Claims 1-6: inventions related to a method for recovering a polycarbonate resin

Claims 7-9: inventions related to a recovered polycarbonate resin

Claims 10-14: inventions related to a flame-retardant polycarbonate resin composition which is defined by claim 10 that is dependent on claim 7

Claims 15-20: inventions related to a flame-retardant polycarbonate resin composition which is defined by claim 15 that is dependent on claim 7

Form PCT/ISA/210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005008816 A
- JP 2007276349 A
- JP 9316316 A
- JP 8081620 A
- JP 3292359 A
- JP 4202465 A
- JP 8302178 A
- JP 10007897 A